# EUROPÄISCHE PATENTANMELDUNG

(11) **EP 4 790 076 A1**
(43) Veröffentlichungstag der Anmeldung: **12.08.2026**
(21) Anmeldenummer: 25226789.3
(22) Anmeldetag: 23.12.2025
(51) Int. Cl.: C08G 18/42, B32B 27/40, C08F 290/14, C08G 18/22, C08G 18/67, C08G 18/69, C08G 18/75, C08K 5/3445, C08K 13/00, C09J 7/30, C09J 11/06, C09J 11/08, C09J 175/14, B32B 7/12, C08G 18/12

(54) **HAFTKLEBEMASSE, KLEBEBAND, VERKLEBTER VERBUND UND VERFAHREN ZUM ELEKTRISCHEN LÖSEN DES VERKLEBTEN VERBUNDES**

(30) Priorität: 06.02.2025 DE 102025104397
(71) Anmelder: TESA SE, 22848 Norderstedt (DE)
(72) Erfinder: POOCK, Dr. Caroline, 22848 Norderstedt (DE); ZENNER, Johannes, 22848 Norderstedt (DE); DIETZE, Sebastian, 22848 Norderstedt (DE); BENECKE, Dr. Jannik, 22848 Norderstedt (DE); WEGENER, Dr. Philipp, 22848 Norderstedt (DE)
(74) Vertreter: tesa SE

(57) **Zusammenfassung**

Die Erfindung betrifft eine Haftklebemasse, ein Haftklebeband, einen verklebten Verbund, ein Verfahren zum elektrischen Lösen des verklebten Verbundes und die Verwendung der Haftklebemasse.

Die Haftklebemasse enthält
a) wenigstens ein vernetztes Polyurethan, welches durch Vernetzung eines oder mehrerer Polyurethan-Prepolymere hergestellt ist, wobei wenigstens eines der Polyurethan-Prepolymere auf wenigstens einem Polyol basiert, welches ausgewählt ist aus der Gruppe bestehend aus Polyester-Polyolen, Polycarbonat-Polyolen und Polyether-Polyolen; und
b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

## Beschreibung

Die Erfindung betrifft eine Haftklebemasse, ein Klebeband, einen verklebten Verbund, ein Verfahren zum elektrischen Lösen des verklebten Verbundes und die Verwendung der Haftklebemasse.

Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3 031 875 B1 die Herabsetzung der Klebkraft einer Acrylat-Klebemasse durch das Anlegen einer Spannung.

Die WO 2016/135341 A1 und die EP 4 067 401 A1 offenbaren reaktive 1-Komponenten bzw. 2-Komponenten-Heißschmelz-Systeme enthaltend NCO-funktionalisiertes Polyurethan und eine Elektrolyt-Verbindung, wobei die Verklebung durch das Anlegen einer Spannung wieder gelöst werden kann. Derartige Systeme sind jedoch aufgrund der verbundenen Temperaturen zur Erzeugung der Verklebung dieser Heißschmelz-Systeme nur für robuste Substrate geeignet.

Es besteht aber ein Bedarf, auch temperaturempfindliche Substrate mit für die Anwendung ausreichender Verklebungsfestigkeit verkleben zu können.

Zudem ist die chemische Beständigkeit von hoher Relevanz, insbesondere im Hinblick auf die Anwendung der Haftklebemasse in tragbaren elektronischen Geräten.

Der vorliegenden Erfindung liegt die Aufgabe zugrunde, eine Haftklebemasse bereitzustellen, die eine optimierte chemische Beständigkeit aufweist und zudem eine stärkere Herabsetzung der Klebkraft durch das Anlegen einer Spannung ermöglicht. Die Klebemasse soll sich somit elektrisch besser ablösen lassen können und zudem gleichzeitig eine hohe Ausgangsklebkraft aufweisen. Gleichzeitig soll das Wiederablösen möglichst einfach und sauber erfolgen können.

Eine weitere Aufgabe besteht darin, die Lagerungsstabilität, insbesondere unter feucht-warmen Bedingungen, einer solchen Haftklebemasse zu optimieren. Die Haftklebemasse soll sich insbesondere auch nach der Lagerung unter feucht-warmen Bedingungen noch gut elektrisch ablösen lassen.

Eine ergänzende Aufgabe ist es, ein entsprechendes vorteilhaftes Klebeband bereitzustellen, welches wenigstens eine Schicht der vorteilhaften Haftklebemasse aufweist. Die Haftklebemasse bzw. das Klebeband soll dabei auch zur Verklebung von temperaturempfindlichen Substraten geeignet sein.

Es ist eine zusätzliche Aufgabe, einen verklebten Verbund und ein Verfahren zum Wiederablösen der durch die Haftklebemasse bzw. das Klebeband hergestellten Klebeverbindung anzugeben.

Zudem ist es eine Aufgabe der Erfindung, eine Verwendung der bereitzustellenden Klebemassen bzw. Klebebänder zur Verklebung von zwei oder mehr Substraten bereitzustellen.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den weiteren, abhängigen Ansprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Damit sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst. Merkmale bevorzugter Klebebänder, verklebten Verbunde sowie Verwendungen und Verfahren ergeben sich aus den Merkmalen bevorzugter Haftklebemassen. Merkmale bevorzugter verklebter Verbunde, Verwendungen und Verfahren ergeben sich zudem aus den Merkmalen bevorzugter Klebebänder.

Insoweit nachfolgend für ein Element, beispielsweise für das Polyurethan, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die erfindungsgemäße Haftklebemasse enthält
a) wenigstens ein vernetztes Polyurethan, welches durch Vernetzung eines oder mehrerer Polyurethan-Prepolymere hergestellt ist, wobei wenigstens eines der Polyurethan-Prepolymere auf wenigstens einem Polyol basiert, welches ausgewählt ist aus der Gruppe bestehend aus Polyester-Polyolen, Polycarbonat-Polyolen und Polyether-Polyolen und besonders bevorzugt ausgewählt ist aus der Gruppe bestehend aus Polyester-Polyolen und Polycarbonat-Polyolen; und
b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

Mittels des enthaltenen Elektrolyten ist die Haftklebemasse auch nach dem Verkleben durch Anlegen einer Spannung elektrisch ablösbar.

Überraschenderweise hat sich herausgestellt, dass sich eine Haftklebemasse enthaltend wenigstens ein Polyurethan und wenigstens ein Elektrolyt ohne großen Kraftaufwand von verklebten Substraten elektrisch durch Anlegen einer Spannung auf einfache, saubere und schnelle Weise wieder ablösen lässt, wobei die Klebkraft vor dem Anlegen der Spannung nicht negativ beeinträchtigt ist. Gleichzeitig ist die Haftklebemasse und die Verklebung im damit erzeugten verklebten Verbund gegenüber Chemikalien beständig. Zudem zeigt die erfindungsgemäße Klebemasse eine überraschend hohe Lagerungsstabilität auch unter feucht-warmen Bedingungen und lässt sich hiernach weiterhin gut elektrisch ablösen. Die Haftklebemasse ist zudem auch für die Verklebung von temperaturempfindlichen Substraten geeignet.

Im Folgenden wird die erfindungsgemäße Haftklebemasse näher ausgeführt.

"Gew.-%" steht wie üblich für Gewichtsprozent.

Der Ausdruck "wenigstens ein" oder das Äquivalente "eines oder mehrere" bezieht sich dabei in branchenüblicher Weise auf die chemische Natur der entsprechenden Substanz und nicht auf deren Stoffmenge. Dem Fachmann ist klar, dass somit unter dem Ausdruck "ein Polyurethan" eine Vielzahl von Polymerketten zu verstehen ist. Im Rahmen der vorliegenden Erfindung weist ein Polyurethan dabei insbesondere eine Molekulargewichtsverteilung auf.

Die erfindungsgemäße Haftklebemasse enthält b) wenigstens ein Elektrolyt.

Unter einem "Elektrolyt" wird vorliegend gemäß dem allgemeinen fachmännischen Verständnis eine chemische Verbindung verstanden, die im festen, flüssigen oder gelösten Zustand in Ionen dissoziiert ist und die sich unter dem Einfluss eines elektrischen Feldes gerichtet bewegt.

Der Elektrolyt ist ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich die Haftklebemasse bzw. das Klebeband auf einfache Weise wieder ablösen, ohne dass die Klebeigenschaften des Klebebandes negativ beeinträchtigt sind.

Ferner sind die Bestandteile von ionischen Flüssigkeiten, insbesondere bei Raumtemperatur, nicht flüchtig. Ionische Flüssigkeiten sind zudem insbesondere gegenüber flüchtigen organischen Substanzen, vergleichsweise hitzestabil und nicht brennbar sowie chemisch vergleichsweise stabil.

Ionische Flüssigkeiten sind im Rahmen der vorliegenden Erfindung Salze, die bei 100 °C, bevorzugt bei Raumtemperatur, also 23 °C, flüssig sind. Ionische Flüssigkeiten enthalten dementsprechend Anionen und Kationen.

Solche ionischen Flüssigkeiten, die bei 100 °C flüssig sind, aber bei 23 °C fest, werden bevorzugt durch geeignete Verfahrensschritte verarbeitbar gemacht, wie insbesondere und beispielsweise durch Lösen in einem Lösungsmittel.

Bevorzugt sind ionische Flüssigkeiten, die bei 23 °C flüssig sind.

Wenn eine Spannung angelegt wird, wandern die Anionen zur anodischen Seite und die Kationen zur kathodischen Seite. Ohne sich hierauf einschränken zu wollen, kann mechanistisch davon ausgegangen werden, dass es hierdurch zu einer Absenkung der Klebkraft der die ionische Flüssigkeit enthaltenden Klebemasse an wenigstens ein Substrat kommt, wodurch eine adhäsive Spaltung zwischen der Klebemasse und dem wenigstens einen Substrat erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasse zwei oder mehrere verschiedene ionische Flüssigkeiten zugegeben werden bzw. die Klebemasse dann zwei oder mehrere verschiedene ionische Flüssigkeiten enthält.

Bevorzugt ist das Anion der ionischen Flüssigkeit ausgewählt aus der Gruppe bestehend aus Hexafluorphosphat (PF₆⁻), Bis(trifluormethylsulfonyl)imid (CF₃SO₂)₂N⁻, TFSI), Acetat (CH₃COO⁻), Tetrafluorborat (BF₄⁻), Octanoat, Tosylat (OTs), Trifluormethansulfonat (CF₃SO₃⁻, OTf, Triflat), Benzoat, Bis(fluorsulfonyl)imid ((FSO₂)₂N⁻, FSI), Dicyanamid (N(CN)₂⁻), Ethylsulfat, Hexylsulfat, Perchlorat, Methansulfonat (CH₃SO₃⁻), Methylsulfat (CH₃O-SO₃⁻), Acrylat, Propionat, Methylcarbonat, Methylphosphonat (CH₄O₃P⁻), Thiocyanat (SCN⁻), Dibutylphosphat, Diethylphosphat, Dodecanoat, Bromid (Br⁻), Fluorid (F⁻), Chlorid (Cl⁻), Iodid (I⁻), Tetrachloroaluminat (AlCl₄⁻), Tetrachloroferrat (FeCl₄⁻), Al₂Cl₇⁻, NO₃⁻, CF₃COO⁻, CF₃CO₃⁻, (CF₃SO₂)₃C⁻, AsF₆⁻, SbF₆⁻, CF₃(CF₂)₃SO₃⁻, (CF₃CF₂SO₂)₂N⁻ und CF₃CF₂CF₂COO⁻.

Besonders bevorzugt ist das Anion ausgewählt aus Hexafluorphosphat (PF₆⁻), Bis(trifluormethylsulfonyl)imid (CF₃SO₂)₂N⁻, TFSI), Acetat (CH₃COO⁻), Tetrafluorborat (BF₄⁻), Octanoat, Tosylat (OTs), Trifluormethansulfonat (CF₃SO₃⁻, OTf, Triflat), Benzoat, Bis(fluorsulfonyl)imid ((FSO₂)₂N⁻, FSI) und Dicyanamid (N(CN)₂⁻).

Hiermit wird eine besonders hohe Reduzierung der Klebkraft durch Anlegen einer Spannung und damit eine besonders gute elektrische Ablösbarkeit der erfindungsgemäßen Haftklebemasse bzw. des erfindungsgemäßen Klebebandes erzielt. Insbesondere gelingt das (Wieder-)Ablösen mit diesem Anion besonders schnell und es verbleiben keine Rückstände.

Wiederum bevorzugt sind das oder die Anion(en) Hexafluorphosphat (PF₆⁻) und/oder Bis(trifluormethylsulfonyl)imid (CF₃SO₂)₂N⁻, TFSI) und/oder Trifluormethansulfonat (CF₃SO₃⁻, OTf, Triflat).

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidinium-Basis, Kationen auf Ammonium-Basis, Kationen auf Phosphonium-Basis, Kationen auf Oxazolium-Basis, Kationen auf Guanidinium-Basis und Kationen auf Thiazolium-Basis.

Besonders bevorzugt ist das Kation ausgewählt aus der Gruppe bestehend aus Kationen auf Imidazolium-Basis.

Hiermit wird eine besonders hohe Reduzierung der Klebkraft durch Anlegen einer Spannung und damit eine besonders gute elektrische Ablösbarkeit der erfindungsgemäßen Klebemasse bzw. des erfindungsgemäßen Klebebandes erzielt. Insbesondere gelingt das (Wieder-)Ablösen mit diesem Kation besonders schnell und es verbleiben keine Rückstände.

Ganz besonders bevorzugt ist das Kation ausgewählt aus der Gruppe bestehend aus 1-Ethyl-3-methylimidazolium (EMIM), 1-Butyl-3-methylimidazolium (BMIM) und 1-Allyl-3-methylimidazolium (AMIM).

Besonders bevorzugt ist der Elektrolyt ausgewählt aus der Gruppe bestehend aus den ionischen Flüssigkeiten
1-Ethyl-3-methylimidazolium-bis(trifluormethylsulfonyl)imid (EMIM-TFSI),
1-Allyl-3-methylimidazolium-bis(trifluormethylsulfonyl)imid (AMIM-TFSI),
1-Ethyl-3-methylimidazolium-Triflat (EMIM-OTf), und
1-Butyl-3-methylimidazolium-hexafluorophosphat (BMIM-PF₆).

Hiermit wird eine besonders hohe Reduzierung der Klebkraft durch Anlegen einer Spannung und damit eine besonders gute elektrische Ablösbarkeit der erfindungsgemäßen Klebemasse bzw. des erfindungsgemäßen Klebebandes erzielt.

Insbesondere gelingt das (Wieder-)Ablösen mit diesem Anion besonders schnell und es verbleiben keine Rückstände.

Die erfindungsgemäße Haftklebemasse enthält bevorzugt 1,0 bis 15 Gew.-%, besonders bevorzugt 2,5 bis 11 Gew.-%, an Elektrolyten, bevorzugt ionischen Flüssigkeiten, bezogen auf das Gesamtgewicht der Haftklebemasse.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasse an insbesondere wenigstens ein Substrat vor dem Ablösen nicht negativ beeinträchtigt ist.

Die erfindungsgemäße Haftklebemasse enthält a) wenigstens ein vernetztes Polyurethan, welches durch Vernetzung eines oder mehrerer Polyurethan-Prepolymere hergestellt ist, wobei wenigstens eines der Polyurethan-Prepolymere auf wenigstens einem Polyol basiert, welches ausgewählt ist aus der Gruppe bestehend aus Polyester-Polyolen, Polycarbonat-Polyolen und Polyether-Polyolen.

Das wenigstens eine Polyurethan a) stellt in der erfindungsgemäßen Klebemasse das Basispolymer dar. Damit stellt das wenigstens eine Polyurethan a) insbesondere auch den Hauptbestandteil der erfindungsgemäßen Haftklebemasse dar.

Gemäß bevorzugter Ausführungsformen der Erfindung beträgt die Gesamtmenge an Polyurethan a) in der Klebemasse 60 bis 99 Gew.-%, besonders bevorzugt 70 bis 98 Gew.-%, bezogen auf das Gesamtgewicht der Klebemasse.

Hierbei ist es gemäß bevorzugter Ausführungsformen denkbar, dass die erfindungsgemäße Klebemasse einfach zusammengesetzt ist und aus Polyurethan a) und Elektrolyt b) besteht. Beispielsweise umfasst die Klebemasse a) 98 bis 99 Gew.-% eines oder mehrerer Polyurethane und b) 1 bis 2 Gew.-% an Elektrolyten, insbesondere ionischen Flüssigkeiten.

Polyurethane an sich sowie die namensgebende Urethan-Gruppe und die zugrundeliegende Chemie sind dem Fachmann ausgehend von seinem allgemeinen Fachwissen umfassend vertraut. So ist dem Fachmann bekannt, dass Polyurethane insbesondere auf der Reaktion, insbesondere Polyaddition, wenigstens einer Hydroxy-Verbindung mit wenigstens einer Isocyanat-Verbindung in einer Ausgangszusammensetzung basieren.

Die wenigstens eine Hydroxy-Verbindung ist im Rahmen der vorliegenden Verbindung wenigstens ein Polyol, bevorzugt wenigstens ein Diol, wobei auch ein Gemisch von Diol(en) und höherwertigen Polyolen umfasst ist.

Die wenigstens eine Isocyanat-Verbindung ist insbesondere wenigstens ein Polyisocyanat, insbesondere wenigstens ein Diisocyanat, wobei auch hier ein Gemisch von Diisocyanat(en) und höherwertigen Polyisocyanaten umfasst ist.

Unter Formulierungen wie "wobei wenigstens eines der Polyurethan-Prepolymere auf wenigstens einem Polyol basiert" ist zu verstehen, dass das jeweilige Polyurethan-Prepolymer durch Reaktion, insbesondere Polyaddition, einer Ausgangszusammensetzung herstellbar ist, welche wenigstens ein Polyol enthält. Der Begriff "basieren" soll diesen Zusammenhang sprachlich verkürzt darstellen und bedeutet nicht, dass das jeweils genannte Polyol die einzige Verbindung in der Ausgangszusammensetzung ist.

Durch das Verhältnis der Anzahl an Hydroxy-Funktionalitäten zu Isocyanat-Funktionalitäten kann insbesondere eingestellt werden, welche Eigenschaften das hergestellte Polyurethan hat.

Werden bei der Herstellung des Polyurethans Isocyanat-Funktionalitäten im Überschuss zu Hydroxy-Funktionalitäten eingesetzt, wird ein Isocyanat-terminiertes Polyurethan erhalten. Dieses ist insbesondere geeignet, mit Luftfeuchtigkeit zu reagieren bzw. darüber auszuhärten.

Werden bei der Herstellung des Polyurethans Hydroxy-Funktionalitäten im Überschuss zu Isocyanat-Funktionalitäten eingesetzt, wird ein Hydroxy-terminiertes Polyurethan erhalten.

Ferner ist es denkbar, dass je nach Reaktionsführung und Beteiligung weiterer Substanzen andere terminale Gruppen anstelle von OH- und/oder NCO-Gruppen vorhanden sind.

Gemäß bevorzugter Ausführungsformen der Erfindung umfasst das wenigstens eine vernetzte Polyurethan a) wenigstens ein Polyurethan, welches nicht Isocyanat-terminiert oder in sonstiger Weise Isocyanat-funktionalisiert ist, was bedeutet, dass dieses wenigstens eine Polyurethan keine freien Isocyanat-Gruppen aufweist.

Das gleiche gilt für das eine oder die mehreren Polyurethan-Prepolymere, durch deren Vernetzung das wenigstens eine Polyurethan a) hergestellt ist.

Gemäß bevorzugter Ausführungsformen der Erfindung umfasst das wenigstens eine vernetzte Polyurethan a) wenigstens ein Polyurethan, welches durch Vernetzung eines oder mehrerer Polyurethan-Prepolymere hergestellt ist, wobei wenigstens eines der Polyurethan-Prepolymere keine freien Isocyanat-Gruppen aufweist.

Gemäß bevorzugter Ausführungsformen der Erfindung sind sämtliche in der Klebemasse enthaltenen Polyurethane a) nicht Isocyanat-terminiert oder in sonstiger Weise Isocyanat-funktionalisiert, was bedeutet, dass jedes der Polyurethane a) keine freien Isocyanat-Gruppen aufweist.

Das gleiche gilt für das eine oder die mehreren Polyurethan-Prepolymere, durch deren Vernetzung das wenigstens eine Polyurethan a) hergestellt ist.

Gemäß bevorzugter Ausführungsformen der Erfindung umfasst das wenigstens eine vernetzte Polyurethan a) wenigstens ein Polyurethan, welches durch Vernetzung eines oder mehrerer Polyurethan-Prepolymere hergestellt ist, wobei sämtliche der Polyurethan-Prepolymere keine freien Isocyanat-Gruppen aufweisen.

Gemäß bevorzugter Ausführungsformen der Erfindung umfasst das wenigstens eine Polyurethan a) der erfindungsgemäßen Haftklebemasse wenigstens ein Hydroxy-terminiertes Polyurethan.

Gemäß bevorzugter Ausführungsformen der Erfindung umfasst das wenigstens eine Polyurethan a) der erfindungsgemäßen Haftklebemasse wenigstens ein Hydroxy-terminiertes Polyurethan, welches durch Vernetzung wenigstens eines Hydroxy-terminierten Polyurethan-Prepolymers hergestellt ist.

Für den Fall, dass die Haftklebemasse zwei oder mehrere verschiedene Polyurethane enthält, sind gemäß bevorzugter Ausführungsformen sämtliche enthaltenen Polyurethane a) Hydroxy-terminiert.

Bevorzugt sind auch hier sämtliche Polyurethan-Prepolymere, durch deren Vernetzung die Polyurethane hergestellt sind, Hydroxy-terminiert.

Gemäß weiterer bevorzugter Ausführungsformen ist nur eines von zwei oder mehreren Polyurethanen a) Hydroxy-terminiert und nur eines von zwei oder mehreren Polyurethan-Prepolymeren Hydroxy-terminiert. Das oder die weiteren Polyurethane oder Polyurethan-Prepolymere tragen entweder NCO-Gruppen oder alternative Endgruppen, wie beispielsweise geblockte NCO-Gruppen oder (Meth)Acrylat-Gruppen.

Erfindungsgemäß enthält die Haftklebemasse als Polyurethan a) wenigstens ein vernetztes Polyurethan, welches durch Vernetzung eines oder mehrerer Polyurethan-Prepolymere hergestellt ist, wobei wenigstens eines der Polyurethan-Prepolymere auf wenigstens einem Polyol basiert, welches ausgewählt ist aus der Gruppe bestehend aus Polyester-Polyolen, Polycarbonat-Polyolen und Polyether-Polyolen.

Besonders bevorzugt ist das Polyol ausgewählt aus der Gruppe bestehend aus Polyester-Polyolen und Polycarbonat-Polyolen.

Ganz besonders bevorzugt ist das Polyol ausgewählt aus der Gruppe bestehend aus Polyester-Polyolen.

Die erfindungsgemäß eingesetzten Polyole weisen bevorzugt eine gewichtsmittlere Molmasse Mw im Bereich von 500 g/mol bis 5.000 g/mol auf. Bevorzugt weisen die Polyole eine gewichtsmittlere Molmasse von mindestens 500 g/mol, und stärker bevorzugt von mindestens 1.000 g/mol, und/oder eine gewichtsmittlere Molmasse von bis zu 5.000 g/mol und stärker bevorzugt von bis zu 3.000 g/mol auf. Bevorzugt ist es vor diesem Hintergrund, dass die Polyester-Polyole, Polycarbonat-Polyole und/oder Polyether-Polyole ausgewählt sind aus der Gruppe bestehend aus Polyolen mit einer gewichtsmittlere Molmasse im Bereich von 500 and 5.000 g/mol, und stärker bevorzugt im Bereich von 1.000 bis 3.000 g/mol. Die erfindungsgemäß eingesetzten Polyole weisen bevorzugt eine Glasübergangstemperatur im Bereich von -80 °C und 5 °C, und stärker bevorzugt von -40 °C und -5 °C auf.

Erfindungsgemäß wird das oder werden die Polyurethan(e) a) in der Haftklebemasse dadurch bereitgestellt, dass zunächst ein Polyurethan-Prepolymer hergestellt wird, welches in weiteren Verfahrensschritten mit anderen Substanzen, wie insbesondere mindestens dem Elektrolyten, vermischt wird und das Polyurethan-Prepolymer oder die Polyurethan-Prepolymere in der Zusammensetzung im Anschluss vernetzt wird bzw. werden.

Gemäß bevorzugter Ausführungsformen der Erfindung ist das wenigstens eine vernetzte Polyurethan a) durch Vernetzung eines Blends aus mindestens zwei verschiedenen Polyurethan-Prepolymeren a1) und a2) hergestellt, wobei sich die Polyurethan-Prepolymere a1) und a2) bezüglich der Zusammensetzung der Polymerkette voneinander unterscheiden, wobei wenigstens eines der Polyurethan-Prepolymere auf einem Polyesterpolyol und/oder einem Polycarbonat-Polyol basiert, wobei Polyesterpolyol auch hier besonders bevorzugt ist.

Unter dem Begriff "Blend" wird wie dem Fachmann geläufig eine Mischung verstanden.

Unter "Polyurethan-Prepolymeren" werden Co-Polymere verstanden, welche durch Polymerisation, genauer Polyaddition, aus einer spezifischen Ausgangszusammensetzung hergestellt werden. Erfindungsgemäß werden unter "Polyurethan-Prepolymeren" solche Verbindungen verstanden, bei denen eine kleine Änderung der Zahl der das Makromolekül bildenden Einheiten nicht mehr eine signifikante Änderung der Eigenschaften bewirkt, so dass in Übereinstimmung mit den IUPAC-Regeln die betreffenden Verbindungen tatsächlich bereits als Polymere und nicht mehr als Oligomere anzusprechen wären. Dies ist zumindest ab einer gewichtsmittleren Molmasse von 10.000 g/mol der Fall. Bevorzugt weisen daher die Polyurethan-Prepolymere eine gewichtsmittlere Molmasse von mindestens 8.000 g/mol, bevorzugt von mindestens 12.000 g/mol und besonders bevorzugt von mindestens 20.000 g/mol auf. Bevorzugt weisen die Polyurethan-Prepolymere eine gewichtsmittlere Molmasse von bis zu 200.000 g/mol, besonders bevorzugt von bis zu 150.000 g/mol, auf. Die Polyurethan-Prepolymere weisen bevorzugt eine Glasübergangstemperatur im Bereich von - 80 °C und 5 °C, und stärker bevorzugt von -40 °C und -5 °C auf.

In Übereinstimmung mit dem fachmännischen Verständnis und dem üblichen Vorgehen im Bereich der Technik ist es zielführend, (Pre-)Polymere über das Herstellungsverfahren beziehungsweise die zur Herstellung verwendeten Ausgangsmaterialien zu definieren, da es weitgehend unmöglich ist, die entsprechenden Materialien in ihrer Gesamtheit anders abschließend zu definieren.

Im Einklang mit diesem üblichen Vorgehen im Bereich der Technik wird die Herstellbarkeit vorstehend in Bezug auf die Ausgangszusammensetzung angegeben, die in Übereinstimmung mit dem fachmännischen Verständnis sämtliche isolierten Verbindungen umfasst, welche im Zuge der Polymerisation zu Baueinheiten der Polyurethan-Prepolymere umgesetzt werden. Zuweilen wird eine entsprechende Ausgangszusammensetzung für die Herstellung von Co-Polymeren auch als Monomerzusammensetzung bezeichnet, wobei dieser Ausdruck im Rahmen der vorliegenden Erfindung nicht verwendet wird, da insbesondere viele der typischerweise eingesetzten Diole bei strenger Auslegung selbst schon oligomere bzw. polymere Verbindungen sind. In Übereinstimmung mit dem fachmännischen Verständnis werden etwaige andere Bestandteile, die bei der Polymerisation gegebenenfalls im Reaktionsgemisch vorhanden sind, bei der Polymerisation jedoch nicht in die Polyurethan-Prepolymere eingebaut werden, wie beispielsweise Lösungsmittel oder nicht reaktive sonstige Verbindungen, nicht der Ausgangszusammensetzung zugerechnet.

Unter Polyurethan-Prepolymeren, die sich bezüglich der Zusammensetzung der Polymerkette voneinander unterscheiden, wird verstanden, dass bei der Herstellung der Polyurethan-Prepolymere chemisch voneinander verschiedene Polyole und/oder Polyisocyanate verwendet wurden.

Gemäß bevorzugter Ausführungsformen basiert das erste Polyurethan-Prepolymer a1) auf einem Polyester-Polyol und/oder einem Polycarbonat-Polyol und das zweite Polyurethan-Prepolymer a2) auf einem hydroxy-terminierten aliphatischen Polymer, bevorzugt einem Polybutadien-Polyol, und/oder einem Polyfarnesen-Polyol und/oder einem fettsäurebasierten Polyester-Polyol. Die obigen Ausführungen zur gewichtsmittleren Molmasse und zur Glasübergangstemperatur der Polyole gilt auch für die Polybutadien-Polyole, Polyfarnesen-Polyole und fettsäurebasierten Polyester-Polyole. Die Polybutadien-Polyole, Polyfarnesen-Polyole und fettsäurebasierten Polyester-Polyole Polyether-Polyole sind bevorzugt ausgewählt aus der Gruppe bestehend aus Polyolen mit einer gewichtsmittlere Molmasse im Bereich von 500 and 5.000 g/mol, und stärker bevorzugt im Bereich von 1.000 bis 3.000 g/mol.

Die genannten Polyole a1) werden im Rahmen der vorliegenden Erfindung auch als "polare Polyole" und die genannten Polyole a2) als "unpolare Polyole" bezeichnet.

Hiermit wird die chemische Beständigkeit der Haftklebemasse und des erzeugten verklebten Verbundes weiter optimiert.

Das Polyester-Polyol sämtlicher Ausführungsformen ist bevorzugt ein aromatisches oder aliphatisches Polyester-Polyol. Besonders bevorzugt ist ein aromatisches Polyester-Polyol. Bevorzugt sind dabei Diole. Das Polyester-Polyol sämtlicher Ausführungsformen ist somit bevorzugt ein aromatisches oder aliphatisches Polyester-Diol. Besonders bevorzugt ist ein aromatisches Polyester-Diol.

Gemäß besonders bevorzugter Ausführungsformen basiert das erste Polyurethan-Prepolymer a1) auf einem Polyester-Polyol und/oder einem Polycarbonat-Polyol und das zweite Polyurethan-Prepolymer a2) auf einem hydroxy-terminierten aliphatischen Polymer, bevorzugt einem Polybutadien-Polyol.

Gemäß weiterer besonders bevorzugter Ausführungsformen basiert das erste Polyurethan-Prepolymer a1) auf einem Polyester-Polyol und das zweite Polyurethan-Prepolymer a2) auf einem hydroxy-terminierten aliphatischen Polymer, bevorzugt einem Polybutadien-Polyol.

Gemäß weiterer besonders bevorzugter Ausführungsformen basiert das erste Polyurethan-Prepolymer a1) auf einem Polycarbonat-Polyol und das zweite Polyurethan-Prepolymer a2) auf einem hydroxy-terminierten aliphatischen Polymer, bevorzugt einem Polybutadien-Polyol.

Gemäß weiterer besonders bevorzugter Ausführungsformen basiert das erste Polyurethan-Prepolymer a1) auf einem Polyester-Polyol und einem Polycarbonat-Polyol und das zweite Polyurethan-Prepolymer a2) auf einem hydroxy-terminierten aliphatischen Polymer, bevorzugt einem Polybutadien-Polyol.

In dieser Ausführungsform kann zunächst ein Prepolymer auf Basis eines Polyester-Polyols und eines Polycarbonat-Polyols hergestellt werden. Alternativ können auch drei verschiedene voneinander getrennte Prepolymer-Zusammensetzungen hergestellt werden, von denen eine erste Prepolymer-Zusammensetzung ein Polyurethan-Prepolymer auf Basis eines Polyester-Polyols, eine zweite Prepolymer-Zusammensetzung ein Polyurethan-Prepolymer auf Basis eines Polycarbonat-Polyols und eine dritte Prepolymer-Zusammensetzung ein Polyurethan-Prepolymer auf Basis eines hydroxy-terminierten aliphatischen Polymers, bevorzugt auf Basis eines Polybutadien-Polyols, enthält.

Insbesondere durch ein Polybutadien-Polyol als weiteres Polyol wird in sämtlichen genannten Ausführungsformen die chemische Beständigkeit, insbesondere gegenüber polaren Medien wie beispielsweise einem Isopropanol-Wasser-Gemisch, und die Feucht-Wärme-Stabilität der Haftklebemasse optimiert.

Es hat sich jedoch gezeigt, dass keine vorteilhaften Eigenschaften erzielt werden, wenn die Haftklebemasse als Polyurethan a) ein Polyurethan enthält, welches ausschließlich auf einem Polybutadien-Polyol basiert.

Bevorzugt beträgt das Mengenverhältnis von Polyurethan-Prepolymeren a1) zu Polyurethan-Prepolymeren a2) 20 bis 95 zu 5 bis 80, besonders bevorzugt 30 bis 95 zu 5 bis 70, bevorzugt 50 bis 95 zu 5 bis 50, bevorzugt 75 bis 95 zu 5 bis 25, beispielsweise bevorzugt 80 zu 20, wobei die Polyurethan-Prepolymere a1) und a2) in den jeweiligen Ausführungsformen jeweils aufgeführt und definiert sind.

Das Polybutadien-Polyol ist bevorzugt ein Polybutadien-Diol.

Zur Einstellung der physikalisch-chemischen Eigenschaften können neben den jeweiligen Diolen in den Ausgangszusammensetzungen auch höherwertige Polyole eingesetzt werden. Nach Einschätzung der Erfinder sollte jedoch die daraus resultierende Verzweigung der Polyurethan-Prepolymere möglichst geringgehalten werden, um die haftklebrigen Eigenschaften nicht negativ zu beeinträchtigen. Bei einem zu hohen Verzweigungsgrad verliert die hergestellte Klebemasse ihre Auffließfähigkeit und ist dann weniger bis gar nicht mehr als Haftklebemasse geeignet.

Bevorzugt umfasst die jeweilige Ausgangszusammensetzung der Polyurethan-Prepolymere somit jeweils eine oder mehrere Polyol-Verbindungen mit drei oder mehr Hydroxy-Gruppen in einem kombinierten Massenanteil von 15 % oder weniger, besonders bevorzugt von 10 % oder weniger, ganz besonders bevorzugt von 3 % oder weniger, überaus bevorzugt von 0,5 % oder weniger, bezogen auf die Masse der betreffenden Ausgangszusammensetzung.

Die EP 4 067 401 A1 offenbart hingegen Heißschmelz-Systeme, bei denen den die Polyurethane zu mehr als 50 Gew.-% auf Triolen basieren, sodass die intermediären Massen so stark verzweigt sind, dass sie nicht haftklebrig sind.

Darüber hinaus können zur Einstellung der physikalisch-chemischen Eigenschaften in den Ausgangszusammensetzungen auch höherwertige Polyisocyanate eingesetzt werden. Nach Einschätzung der Erfinder sollte die daraus resultierende Verzweigung der Polyurethan-Prepolymere jedoch möglichst geringgehalten werden, um die haftklebrigen Eigenschaften nicht negativ zu beeinträchtigen. Bei einem zu hohen Verzweigungsgrad verliert die hergestellte Klebemasse ihre Auffließfähigkeit und ist dann weniger bis gar nicht mehr als Haftklebemasse geeignet.

Bevorzugt ist hierbei, dass die jeweilige Ausgangszusammensetzung eine oder mehrere Polyisocyanat-Verbindungen mit drei oder mehr Isocyanat-Gruppen umfassen, und zwar in einem kombinierten Massenanteil von 15 % oder weniger, besonders bevorzugt von 10 % oder weniger, ganz besonders bevorzugt von 3 % oder weniger, überaus bevorzugt von 0,5 % oder weniger, jeweils bezogen auf die Masse der betreffenden Ausgangszusammensetzung.

Grundsätzlich sind dem Fachmann eine Vielzahl an geeigneten Diisocyanat-Verbindungen bekannt. Bevorzugt ist nach Einschätzung der Erfinder jedoch, dass die jeweilige Diisocyanat-Verbindung zur Herstellung der Polyurethane bzw. der Polyurethan-Prepolymere ausgewählt ist aus der Gruppe bestehend aus Hexamethylendiisocyanat, 1,6-Diisocyanato-2,2,4-trimethylhexan, Pentamethylendiisocyanat, (S)-Ethyl 2,6-diisocyanatohexanoat, (R)-Ethyl 2,6-diisocyanatohexanoat, Isophorondiisocyanat, 1,1'-Methylenbis(4-isocyanatocyclohexan), 4,4'-Methylen-bis-(phenylisocyanat), Toluol-2,4-diisocyanat, Naphthylen-1,5-diisocyanat und meta-Tetramethylxylylendiisocyanat.

Bei der Herstellung der erfindungsgemäßen Haftklebemasse wird wie beschrieben zunächst wenigstens eine sogenannte Polyurethan-Prepolymerzusammensetzung hergestellt, die anschließend vernetzt wird, um eine vernetzte Haftklebmasse zu erhalten.

Diese Prepolymerzusammensetzung umfasst bevorzugt neben dem mindestens einen Polyurethan-Prepolymer auch - sofern vorhanden - die sonstigen Komponenten, welche später in der vernetzten Haftklebmasse enthalten sein sollen, wie beispielsweise Harze, Farbstoffe oder sonstige Additive, die vom Fachmann je nach dem angestrebten Anwendungszweck zugegeben werden können. Der mit Blick auf die Erfindung wesentliche Bestandteil der Prepolymerzusammensetzung ist wenigstens ein Polyurethan-Prepolymer.

Im Fall von einem Blend aus wenigstens zwei oder mehreren verschiedenen Polyurethan-Prepolymeren werden bevorzugt zwei zunächst voneinander getrennte Polyurethan-Prepolymer-Zusammensetzungen hergestellt, von denen die erste die PrepolymerZusammensetzung des Polyurethans a1) und die zweite die Prepolymer-Zusammensetzung des Polyurethans a2) ist.

Diese werden im Anschluss miteinander vermischt.

Die Herstellung der einen oder mehreren Prepolymer-Zusammensetzungen kann in einem Lösungsmittel oder lösemittelfrei erfolgen.

Bevorzugt erfolgt die Herstellung der einen oder mehreren Prepolymer-Zusammensetzungen und damit die Herstellung der erfindungsgemäßen Haftklebemasse in einem Lösungsmittel. Das Lösungsmittel ist bevorzugt ausgewählt ist aus der Gruppe bestehend aus Ketonen, beispielsweise Aceton oder Butanon (MEK = Methylethylketon), Estern, beispielsweise Ethylacetat, Ethern, Amiden, Kohlenwasserstoffen, beispielsweise Benzin 60/90, Toluol, halogenhaltigen Kohlenwasserstoffen und Mischungen dieser Lösungsmittel.

Das Lösungsmittel wird bevorzugt verdampft, nachdem die Haftklebemasse zu einer Schicht ausgestrichen wurde.

Das oder die enthaltenen Polyurethane a) sind vernetzt.

Der Fachmann versteht, dass damit ausgedrückt wird, dass das oder die Polyurethan-Prepolymere in Folge der Vernetzung zumindest teilweise vernetzt wurden. In Übereinstimmung mit dem fachmännischen Verständnis wird hierdurch nicht ausschließlich das Erreichen der theoretisch maximal möglichen Vernetzung im Sinne einer vollständigen Vernetzung der Haftklebmasse gefordert. Vielmehr ist jede erfolgte Vernetzung ausreichend, die zu einer technisch sinnvollen und nutzbaren Veränderung der Eigenschaften der Prepolymer-Zusammensetzung bzw. der Haftklebmasse führt.

Der Fachmann versteht, dass sich die Ausdrücke "vernetzt" und damit auch das Gegenteil "unvernetzt" auf die chemische Vernetzung, d.h. die kovalente Verbindung einzelner Co-Polymerstränge untereinander zu einem Netzwerk und nicht auf eine etwaige physikalische Vernetzung der Co-Polymerketten, beispielsweise durch Verschlaufung, Phasenseparation oder Kristallisation, beziehen, so dass Polyurethan-Prepolymere regelmäßig schmelzfähig sind. Der Fachmann versteht, dass ein unvernetztes Polyurethan-Prepolymer nicht zwangsläufig linear sein muss, sondern auch Co-Polymerketten mit Verzweigungen aufweisen kann, was insbesondere der Fall sein kann, wenn die Ausgangszusammensetzung zur Herstellung des Polyurethans neben Diisocyanaten und Diolen auch höherwertige Polyisocyanate und/oder Polyole umfasst. Auch wenn der Übergang von verzweigten Co-Polymerketten zu einem vernetzten Netzwerk der vernetzten Haftklebmasse in der Theorie unscharf erscheinen mag, ist der unvernetzte Zustand bzw. die Vernetzung, für den Fachmann in der Praxis relativ zwanglos zu bestimmen, wobei der Fachmann dies beispielsweise anhand der temperaturabhängigen rheologischen Eigenschaften oder mit einfachen Löslichkeitstest bestimmen kann. In vernetzten Haftklebmassen weisen die entstehenden vernetzten Polyurethane nämlich ein stark gesteigertes Molekulargewicht auf und sind infolgedessen regelmäßig nicht mehr in organischen Lösemitteln lösbar bzw. nicht mehr schmelzbar, sodass eine, im Wesentlichen irreversible, Verflüssigung nur noch durch Zersetzung möglich ist.

Unabhängig vom Vernetzungsgrad gilt in jedem Fall, dass die erfindungsgemäße Haftklebemasse enthaltend das wenigstens eine vernetzte Polyurethan a) und das erfindungsgemäße Haftklebeband direkt auf Substrate appliziert werden können und nicht etwa nach oder während der Applikation noch ein Vernetzungsschritt erfolgt. Die haftklebrigen Eigenschaften sind bei der Applikation vorteilhaft und ein weiterer Verfahrensschritt, der ggf. das Substrat beschädigen könnte wie beispielsweise ein Erwärmen, ist nicht notwendig.

Die Vernetzung der Polyurethan-Prepolymere kann grundsätzlich beliebig und auf jede dem Fachmann bekannte Weise erfolgen, z.B. über endständige oder auch kettenständige OH- und NCO-Gruppen. Der Begriff "kettenständig" bezeichnet hier in Abgrenzung zu "endständig" OH-und -NCO-Gruppen, die nicht terminal, sondern als Substituenten an Atomen vorliegen, die den zwischen den Kettenendgliedern verlaufenden Teil der Polymerhauptkette bilden oder eine aus der Hauptkette herausstehende Seitenkette bilden, wobei sie in letzterem Fall aber wieder nicht das Endglied der Seitenkette bilden.

Bevorzugt ist es jedoch, dass das oder die Polyurethan-Prepolymere zur Herstellung des vernetzten Polyurethans a) jeweils auf der Polyaddition einer Ausgangszusammensetzung basieren, die wenigstens eine Diol-Verbindung A enthält, wobei die Diol-Verbindung A mindestens eine aus der zwischen den OH-Gruppen verlaufenden Kette herausstehende C-C-Doppelbindung pro Molekül aufweist.

Hierbei beträgt der Anteil an Diol-Verbindungen A in der Ausgangszusammensetzung des jeweiligen Prepolymers 15 Gew.-% oder weniger, besonders bevorzugt von 10 % oder weniger, ganz besonders bevorzugt von 5 % oder weniger, beträgt, bezogen auf das Gesamtgewicht der betreffenden Ausgangszusammensetzung.

Wiederum bevorzugt ist die wenigstens eine Diol-Verbindung A in der jeweiligen Ausgangszusammensetzung zur Herstellung des jeweiligen Polyurethan-Prepolymers zu 3 Gew.-% oder weniger, ganz besonders bevorzugt zu 1 Gew.-% oder weniger, enthalten, jeweils bezogen auf das Gesamtgewicht der betreffenden Ausgangszusammensetzung.

Die Vernetzung der Polyurethan-Prepolymere zur Herstellung des vernetzten Polyurethans a) erfolgt über diese herausstehenden C-C-Doppelbindungen.

Bevorzugt erfolgt die Vernetzung in diesem Verfahren radikalisch, insbesondere strahlungsinitiiert radikalisch, besonders bevorzugt UV-initiiert radikalisch; anders als im Stand der Technik erfolgt sie in diesem Fall somit nicht bzw. zumindest nicht ausschließlich, bevorzugt gar nicht, durch die Umsetzung mit multifunktionellen Isocyanaten. Typische Polyurethan-Prepolymere lassen sich jedoch eigentlich nicht radikalisch vernetzen. Dies wird erst durch die C-C-Doppelbindungen möglich, die bevorzugt durch die betreffenden Diol-Verbindungen in die Polyurethan-Prepolymere eingebaut werden. Dabei haben die Erfinder erkannt, dass nicht nur die Anwesenheit von aus der zwischen den OH-Gruppen verlaufenden Kette herausstehenden C-C-Doppelbindungen notwendig ist, sondern dass als mit solchen C-C-Doppelbindungen ausgestattete Diol-Verbindungen bevorzugt solche Diole eingesetzt werden sollten, die lediglich eine, d.h. genau eine, dieser C-C-Doppelbindungen tragen, um eine optimale Vernetzung zu ermöglichen und gleichzeitig vorteilhafte Eigenschaften in der vernetzten Klebemasse, insbesondere gute Dämpfungs- und Klebeeigenschaften zu erlauben.

Besonders bevorzugt ist somit, dass wenigstens ein Polyurethan a) auf einem Polyurethan-Prepolymer basiert, welches wiederum auf wenigstens einer Diol-Verbindung A basiert, die genau eine aus der zwischen den OH-Gruppen verlaufenden Kette herausstehende C-C-Doppelbindung pro Molekül aufweist.

Im Sinne der Textverständlichkeit und Übersichtlichkeit werden im Rahmen der vorliegenden Erfindung Diol-Verbindungen, die mindestens eine aus der zwischen den OH-Gruppen verlaufenden Kette herausstehende C-C-Doppelbindung pro Molekül aufweisen, als "Diol-Verbindungen A" bezeichnet.

Die wenigstens eine Diol-Verbindung A sollte nach Einschätzung der Erfinder zum Erhalt besonders vorteilhafter Polyurethan-Prepolymere bzw. vorteilhafter vernetzter Haftklebmassen bevorzugt eher kurz ausgelegt werden. Hierdurch werden durch diese Diol-Verbindungen nicht nur die für die Vernetzung benötigten Doppelbindungen in die Polyurethan-Prepolymere eingebaut, sondern auch eine relativ hohe Dichte an UrethanGruppen in den Polyurethanen erhalten. Durch die hohe Dichte an strukturell vergleichsweise rigiden funktionellen Gruppen und die Ausbildung von Wasserstoffbrücken wird die Kohäsion der Haftklebmasse erhöht, was den klebtechnischen Eigenschaften zugutekommt.

Bevorzugt ist es vor diesem Hintergrund, dass die wenigstens eine Diol-Verbindung A ausgewählt ist aus der Gruppe bestehend aus Diolen mit 4 bis 60, stärker bevorzugt 5 bis 30, besonders bevorzugt 6 bis 10, C-Atomen. Bevorzugt ist zusätzlich oder alternativ, dass die wenigstens eine Diol-Verbindung A ausgewählt ist aus der Gruppe bestehend aus Diolen mit einer Molmasse im Bereich von 70 bis 750 g/mol, stärker bevorzugt im Bereich von 100 bis 500 g/mol, besonders bevorzugt im Bereich von 140 bis 250 g/mol.

Besonders bevorzugt ist die wenigstens eine Diol-Verbindung A ausgewählt aus der Gruppe bestehend aus (Meth)Acrylaten.

Damit basiert bevorzugt wenigstens eines der Polyurethan-Prepolymere auf einem Diol, welches (Meth)Acrylat-Gruppen trägt und damit ein (Meth)Acrylat-funktionalisiertes Diol ist. Dies gilt analog für Polyole.

Besonders bevorzugt ist damit eine erfindungsgemäße Haftklebemasse, die wenigstens ein Polyurethan a) enthält, welches auf der Vernetzung wenigstens eines Polyurethan-Prepolymers basiert, welches auf wenigstens einem (Meth)Acrylat-funktionalisierten Diol basiert.

Dies gilt analog für Polyole.

Über diese (Meth)Acrylat-Gruppen der Polyurethan-Prepolymerketten erfolgt dann wie oben beschrieben die Vernetzung.

Bevorzugt sind die (Meth)Acrylat-funktionalisierten Diole ausgewählt aus der Gruppe bestehend aus Dihydroxyalkyl(meth)acrylaten.

Ein bevorzugtes Diol A ist Glycerolmonomethacrylat (2,3-Dihydroxypropylmethacrylat).

Bevorzugt sind das oder die Polyurethane mittels ultravioletter (UV-)Strahlung oder mittels Elektronenstrahl-Härtung (ESH) vernetzt.

Für die Herstellung der Polyurethan-Prepolymere ist es nach Einschätzung der Erfinder in vielen Fällen zweckmäßig, einen Katalysator vorzusehen. Der Katalysator ist bevorzugt ausgewählt aus der Gruppe bestehend aus Organobismuthverbindungen, Organozinnverbindungen, Organozirkoniumverbindungen, Organozinkverbindungen, tertiären Aminverbindungen, morphinhaltigen Verbindungen, eisenhaltigen Salzen und kaliumhaltigen Salzen.

Gemäß bevorzugter Ausführungsformen wird als Katalysator wenigstens eine Organobismuthverbindung verwendet.

Bevorzugt ist damit auch eine erfindungsgemäße Haftklebemasse, die wenigstens einen Katalysator enthält, der bevorzugt ausgewählt ist aus der Gruppe bestehend aus Organobismuthverbindungen, Organozinnverbindungen, Organozirkoniumverbindungen, Organozinkverbindungen, tertiären Aminverbindungen, morphinhaltigen Verbindungen, eisenhaltigen Salzen und kaliumhaltigen Salzen, wobei Organobismuthverbindungen besonders bevorzugt sind.

Für die Vernetzung der Polyurethan-Prepolymere kann in vorteilhafter Weise auf typische Initiatorsysteme zurückgegriffen werden, die dem Fachmann zur radikalischen Vernetzung, wie sie beispielsweise auch bei (Meth)Acrylat-basierten Systemen zum Einsatz kommt, bekannt sind.

Dabei ist nach Einschätzung der Erfinder insbesondere die (UV-)strahlenbasierte Härtung vorteilhaft.

Bevorzugt wird hierzu eine oder mehrere Initiator-Verbindungen ausgewählt, die ausgewählt sind aus der Gruppe bestehend aus strahlungsaktivierten Initiatoren, thermisch-aktivierten Initiatoren und Redox-Initiatoren, stärker bevorzugt ausgewählt sind aus der Gruppe bestehend aus thermisch-aktivierten Initiatoren und strahlungsaktivierten Initiatoren, besonders bevorzugt strahlungsaktivierten Initiatoren.

Bevorzugt sind die eine oder die mehreren Initiator-Verbindungen ausgewählt aus der Gruppe bestehend aus α-Hydroxyketonen, α-Alkoxyketonen, α-Amino-Arylketonen, Diarylketonen, Azoverbindungen, Acylphospinoxiden, organischen oder anorganischen Peroxiden, Campherchinonen und Campherchinon-Derivaten.

Gemäß bevorzugter Ausführungsformen enthält die erfindungsgemäße Haftklebemasse wenigstens einen Initiator, der bevorzugt ausgewählt ist aus der Gruppe bestehend aus thermisch-aktivierten Initiatoren und strahlungsaktivierten Initiatoren, besonders bevorzugt strahlungsaktivierten Initiatoren, und wiederum bevorzugt ausgewählt ist aus der Gruppe bestehend aus α-Hydroxyketonen, α-Alkoxyketonen, α-Amino-Arylketonen, Diarylketonen, Azoverbindungen, Acylphospinoxiden, organischen oder anorganischen Peroxiden, Campherchinonen und Campherchinon-Derivaten.

Bevorzugt ist der wenigstens eine Initiator in einer Menge von 0,001 bis 5 Gew.-%, besonders bevorzugt von 0,05 bis 1 Gew.-%, in der jeweiligen Prepolymer-Zusammensetzung enthalten, bezogen auf die Masse der Polyurethan-Prepolymere in der jeweiligen PrepolymerZusammensetzung.

Im Fall der ESH-Vernetzung ist nicht notwendigerweise ein Initiator enthalten.

Die Erfinder haben im Fall der thermischen Vernetzung Temperaturbereiche identifiziert, mit denen sich bei der Vernetzung besonders vorteilhafte Ergebnisse erzielen lassen. Bevorzugt erfolgt das Vernetzen der Polyurethan-Prepolymere in der Prepolymer-Zusammensetzung bzw. das Vernetzen der wenigstens einen Prepolymer-Zusammensetzung bei einer Temperatur im Bereich von 40 bis 300 °C, stärker bevorzugt im Bereich von 50 bis 280 °C, besonders bevorzugt im Bereich von 60 bis 150 °C, erfolgt.

Bevorzugt ist alternativ bei Verwendung von strahlungsaktivierten Initiatoren, dass das Vernetzen der Polyurethan-Prepolymere in der Prepolymer-Zusammensetzung bei einer Temperatur im Bereich von -10 bis 40 °C, stärker bevorzugt im Bereich von 10 bis 30 °C, besonders bevorzugt im Bereich von 20 bis 25 °C, erfolgt.

Nach Einschätzung der Erfinder kann es vorteilhaft sein, wenn die hergestellte Haftklebmasse auch Harze, insbesondere Klebharze, umfasst.

Gemäß bevorzugter Ausführungsformen der Erfindung enthält die Haftklebmasse ein oder mehrere Harze und damit wenigstens ein Harz.

Bevorzugt ist das Harz ein Klebharz. Geeignet und bevorzugt sind zum Beispiel Polymere auf Basis ungesättigter C₅- oder C₉-Monomere; Terpenphenolharze; Polyterpenharze auf Basis von α-Pinen und/oder β-Pinen und/oder δ-Limonen; aromatische Harze wie Cumaron-Inden-Harze oder Harze auf Basis von Styrol oder α-Methylstyrol sowie Kolophonium und seine Folgeprodukte, zum Beispiel disproportionierte, dimerisierte oder veresterte Harze, zum Beispiel Umsetzungsprodukte mit Glycol, Glycerin oder Pentaerythrit.

Unter einem "Klebharz" wird entsprechend dem allgemeinem Fachmannverständnis ein oligomeres oder polymeres Harz verstanden, das die Adhäsion (die Klebkraft) der Klebemasse im Vergleich zu der kein Klebharz enthaltenden, ansonsten aber identischen Klebemasse erhöht.

Bevorzugt ist das wenigstens eine Harz ein Kohlenwasserstoffharz.

Die Gesamtmenge an Harzen, insbesondere Klebharzen, beträgt bevorzugt von 0,5 bis 30 Gew.-%, besonders bevorzugt von 1 bis 15 Gew.-%, ganz besonders bevorzugt von 1 bis 10 Gew.-%, bezogen auf das Gesamtgewicht der Haftklebemasse.

In den genannten Bereichen der Gesamtmenge an Harzen weist die Haftklebemasse sehr gute Klebkräfte sowie trotzdem eine elektrische Wiederablösbarkeit auf und ist für bestimmte Anwendungen hinsichtlich der chemischen Beständigkeit optimiert, wobei die Klebemasse hinsichtlich des Zielkonfliktes aus Klebkraft, chemischer Beständigkeit sowie Wiederablösbarkeit in den Mengen-Bereichen, die sich aus der Wahl der Untergrenzen und Obergrenzen höherer Bevorzugungsstufen ergeben, entsprechend weiter optimiert ist.

Die erfindungsgemäße Haftklebemasse weist gemäß weiterer bevorzugter Ausführungsformen kein Harz auf.

Gemäß weiterer bevorzugter Ausführungsformen der Erfindung sind als Additive Schutzmittel enthalten. Hier seien Alterungsschutzmittel primärer und sekundärer Art, Licht- und UV-Schutzmittel sowie Flammschutzmittel genannt.

Ferner kann die Klebemasse aber auch Farbstoffe und Pigmente enthalten. Die Klebemasseschicht kann so beliebig gefärbt oder weiß, grau oder schwarz sein. Als solche oder andere weitere Additive können typischerweise genutzt werden:
- primäre Antioxidantien wie zum Beispiel sterisch gehinderte Phenole, vorzugsweise mit einem Anteil von 0,2 bis 1 Gew.-%,
- sekundäre Antioxidantien, wie zum Beispiel Phosphite oder Thioether, vorzugsweise mit einem Anteil von 0,2 bis 1 Gew.-%,
- Lichtschutzmittel wie zum Beispiel UV-Absorber oder sterisch gehinderte Amine, vorzugsweise mit einem Anteil von 0,2 bis 1 Gew.-%,
- Verarbeitungshilfsmittel, vorzugsweise mit einem Anteil von 0,2 bis 1 Gewichtsteilen bezogen auf 100 Gew.-%
- Kompatibilisatoren.

Sofern die Klebemasse mit einer Schicht in Kontakt kommt, aus der potenziell sogenannte Kautschukgifte wie Kupfer-, Mangan-II, Eisen-II, Cobalt- oder Nickel-Ionen freigesetzt werden können, wird ihr vorteilhafterweise zumindest eine Sorte eine Metalldeaktivators, auch "Metal Scavenger" genannt, zugesetzt. Konkrete Beispiele hierfür sind ADK-Stab CDA-1, CDA-1H, CDA-6 und CDA-10 sowie ADK-Stab ZS-27 oder ZS-90 der Firma Adeka, Hostanox OSP1 der Firma Clariant, Naugard XL-1 der Firma SIGroup und Irganox MD-1024 der Firma BASF. Typische Einsatzmengen liegen bei bis zu 0,5 Gew.-%.

Die erfindungsgemäße Haftklebemasse weist gemäß weiterer bevorzugter Ausführungsformen eine ionische Leitfähigkeit (bestimmt nach der unten genannten Methode) von 0,1 µS/m bis 8,0 µS/m, und bevorzugt von 1,0 µS/m bis 4,0 µS/m auf.

Die erfindungsgemäße Klebemasse ist eine Haftklebemasse.

Unter einer Haftklebemasse wird vorliegend, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Das oder die enthaltenen vernetzten Polyurethane a) werden damit besonders bevorzugt durch Vernetzung eines oder mehrerer Polyurethan-Prepolymere hergestellt, wobei das oder die Polyurethan-Prepolymere alle auf amorphen oder semikristallinen Polyolen basieren. Umgekehrt enthalten die Ausgangszusammensetzungen zur Herstellung der Polyurethan-Prepolymere bevorzugt keine kristallinen Polyole.

Zudem sind damit bevorzugt auch die Polyurethan-Prepolymere amorph oder semikristallin. Dies gilt für sämtliche Ausführungsformen.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721-1:2019) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert:
G' = (τ/γ) • cos(δ) (τ = Schubspannung, γ = Deformation, δ = Phasenwinkel = Phasenverschiebung zwischen Schubspannungs- und Deformationsvektor).

Die Definition des Verlustmoduls G" lautet:
G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23 °C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Bevorzugt weist die Haftklebemasse im Deformationsfrequenzbereich von 10⁰ bis 10¹ rad/sec bei 23 °C einen Speichermodul G' und einen Verlustmoduls G" im Bereich von 10³ bis 10⁷ Pa, bestimmt gemäß DIN EN ISO 6721-1:2019, auf.

Zur Erzielung der viskoelastischen Eigenschaften werden die Ausgangsverbindungen, insbesondere die Oligomere oder Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765:1994-03) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist die Haftklebemasse eine Glasübergangstemperatur von ≤ 23 °C, bestimmt gemäß DIN 53765:1994-03, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) keine Klebrigkeit auf, wiewohl auch in Heißschmelzklebstoffzusammensetzungen.

Ein weiterer Gegenstand der vorliegenden Erfindung ist ein Klebeband umfassend wenigstens eine Klebemasseschicht D wenigstens einer erfindungsgemäßen Haftlebemasse.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Ein weiterer Gegenstand der vorliegenden Erfindung ist ein verklebter Verbund umfassend wenigstens folgende Schichten:
- Ein erstes Substrat A; und
- Ein zweites Substrat B; und
- Ein erfindungsgemäßes Klebeband, welches zwischen dem Substrat A und dem Substrat B angeordnet ist und die Substrate A und B miteinander verklebt.

Dabei sind insbesondere entweder das Substrat A und das Substrat B oder wenigstens eines der Substrate und das Klebeband oder keines der Substrate und das Klebeband an zwei verschiedenen Stellen elektrisch leitfähig ausgestaltet.

Ein weiterer Gegenstand der vorliegenden Erfindung ist ein Verfahren zum elektrischen Lösen des erfindungsgemäßen Verbundes, umfassend wenigstens folgende Verfahrensschritte:
i.) Anlegen einer Spannung an zwei verschiedenen Stellen des Verbundes, wobei die Spannung bevorzugt 1 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Bevorzugt beträgt die Spannung 2 bis 50 V.

Gemäß bevorzugter Ausführungsformen der Erfindung beträgt die Spannung 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc. oder eine Batterie von außen hinzugefügt wird.

Gemäß weiterer bevorzugter Ausführungsformen der Erfindung beträgt die Spannung 12 bis 50 V. Durch diese vergleichsweise hohe Spannung kann das Wiederablösen besonders schnell erfolgen; die Spannung muss dabei nur für wenige Sekunden angelegt werden.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf schnelle und einfache Weise voneinander lösen, ohne dass ein allzu großer Kraftaufwand erforderlich ist.

Gemäß besonders bevorzugter Ausführungsformen der Erfindung beträgt die Spannung 3 bis 12 V und wir für 10 bis 120 Sekunden angelegt, insbesondere bevorzugt beträgt die Spannung 8 bis 12 V, beispielsweise 9 V, und wird für 30 bis 90 Sekunden, beispielsweise 60 Sekunden, angelegt.

Sofern sich die Schichten nach Anlegen der Spannung nicht ohne weitere Einwirkung voneinander lösen, umfasst das erfindungsgemäße Verfahren wenigstens den weiteren Verfahrensschritt:
ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als die Klebkraft vor dem Anlegen der Spannung gemäß Schritt i.)

Das Anlegen der Spannung gemäß Schritt i.) erfolgt an zwei verschiedenen elektrisch leitfähigen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es zu einer Herabsenkung der Klebkraft kommt. Ohne an eine bestimmte Theorie gebunden sein zu wollen, wird von den Erfindern folgender Mechanismus angenommen: Durch das Anlegen der Spannung erfolgt eine Wanderung der Ionen der ionischen Flüssigkeiten, insbesondere eine Trennung der Anionen und Kationen der ionischen Flüssigkeiten, in der Klebemasseschicht D. Hierdurch wird die Adhäsion der Klebemasseschicht D an das Substrat A und/oder das Substrat B stark herabgesetzt und es erfolgt ein Lösen dieser Schichten voneinander. Insbesondere erfolgt die adhäsive Spaltung zu dem Substrat, an welches der Minuspol angelegt wurde.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B, welches elektrisch leitfähig ist; und
- Ein erfindungsgemäßes Klebeband, welches aus der Klebemasseschicht D besteht und zwischen dem Substrat A und dem Substrat B angeordnet ist und die Substrate A und B miteinander verklebt.

Gemäß weiterer bevorzugter Ausführungsformen umfasst das Klebeband zusätzlich zur ersten Klebemasseschicht D wenigstens die folgenden Schichten:
- wenigstens eine elektrisch leitfähige Trägerschicht T und
- Optional eine zweite Klebemasseschicht C, die auf der der Klebemasseschicht D gegenüberliegenden Seite der Trägerschicht T angeordnet ist.

Ein derartiges Klebeband kann als einseitiges Klebeband (wenn keine weitere Klebemasse vorhanden ist) oder als doppelseitiges Klebeband über die zweite Klebemasseschicht C an eine Vielzahl unterschiedlicher Substrate angepasst werden. Bevorzugt ist die doppelseitige Ausführungsform, bei der eine zweite Klebemasseschicht C auf der der Klebemasseschicht D gegenüberliegenden Seite der Trägerschicht T angeordnet ist.

Bei den Substraten kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Durch das Anlegen der Spannung wird die Adhäsion der Klebemasseschicht D an das Substrat A stark herabgesetzt und es erfolgt ein Lösen dieser Schichten voneinander.

Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B; und
- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen umfasst das Klebeband zusätzlich zur ersten Klebemasseschicht D wenigstens die folgenden Schichten:
- Eine zweite Klebemasseschicht C; und
- wenigstens eine erste elektrisch leitfähige Trägerschicht T, die zwischen den Schichten D und C angeordnet ist; und
- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist.

Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.

Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.

Analog zu obigen Ausführungsformen wird angenommen, dass durch das Anlegen der Spannung die Adhäsion der Klebemasseschicht D an die elektrisch leitfähigen Trägerschichten T und T' stark herabgesetzt wird und somit ein Lösen dieser Schichten voneinander erfolgt.

Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.

Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.

Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T'-C' verwendet.

Gemäß bevorzugter Ausführungsformen der vorliegenden Erfindung umfasst der verklebte Verbund somit folgende Schichten:
- Ein erstes Substrat A; und
- Ein zweites Substrat B; und
- Ein erfindungsgemäßes Klebeband, welches aus dem Fünfschichtverbund C-T-D-T'-C' besteht und die Substrate A und B miteinander verklebt.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung der erfindungsgemäßen Haftklebemasse oder des erfindungsgemäßen Klebebandes oder des erfindungsgemäßen verklebten Verbundes in elektronischen Geräten, Automobilen, medizinischen Geräten, zahnmedizinischen Geräten sowie im handwerklichen Bereich und im Haushalt.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Gemäß bevorzugter Ausführungsformen der Erfindung ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zinn, Kupfer, Nickel, Chrom-Nickel und Nickel-Eisen. Sehr bevorzugt sind Aluminium oder Zinn.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 µm (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie oder Nickel-Eisen-Folie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgetragenen Metalls, bevorzugt ausgewählt aus der Gruppe bestehend aus Kupfer, Zinn und Aluminium, und/oder d) wenigstens ein Gitter aus Metall und/oder e) eine metallisierte Folie und damit eine Folie, die mit Metall beschichtet ist, wobei das Metall bevorzugt ausgewählt ist aus der Gruppe bestehend aus Aluminium, Zinn, Chrom-Nickel und Nickel-Eisen.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien oder Nickel-Eisen-Folien, sind dem Fachmann bekannt.

Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 µm, besonders bevorzugt von 10 bis 30 µm auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Im Fall von aufgetragenem Metall als Trägerschicht ist es gemäß vorteilhafter Ausführungsformen bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Es ist aber auch denkbar und bevorzugt, dass keine der Schichten eine andere Schicht überragt. Hierdurch kann der Verbund der Schichten auf einfache Weise gemeinsam verarbeitet, insbesondere gestanzt oder auf sonstige Weise in die gewünschte Form gebracht werden. Denkbar und bevorzugt ist hierbei auch, dass zwei elektrisch leitfähige Substrate A und B verklebt werden und die Spannung an diese Substrate angelegt wird.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall beschichteten Folie wird insbesondere eine elektrisch nicht leitfähige Folie mit Metall beschichtet, um diese elektrisch leitfähig auszubilden. Das Metall ist bevorzugt ausgewählt aus der Gruppe bestehend aus Kupfer, Nickel, Zink, Zinn, Silber, Gold, Aluminium, Eisen, Chrom und Legierungen dieser genannten Metalle, wobei Aluminium, Zinn, Chrom-Nickel und Nickel-Eisen besonders bevorzugt sind. Das Material der Folie kann prinzipiell ausgewählt sein aus sämtlichen Materialien, die dazu geeignet sind mit Metall bedampft zu werden und als Trägerfolie in Klebebändern verwendet zu werden, wobei insbesondere Polymere geeignet sind. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP.

Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

Das Beschichten der Folie mit Metall kann auf jede dem Fachmann bekannte Weise erfolgen.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß weiterer vorteilhafter Ausführungsformen ist es aber auch denkbar und bevorzugt, dass keine der Trägerschichten eine andere Schicht, insbesondere benachbarte Klebemasseschicht, überragt. Hierdurch kann der Verbund der Schichten auf einfache Weise gemeinsam verarbeitet, insbesondere gestanzt oder auf sonstige Weise in die gewünschte Form gebracht werden.

Ein derartiger Aufbau hat somit den Vorteil, dass eine einfache Herstellbarkeit gegeben ist und zudem durch die Trägerschicht(en) die Stabilität des Klebebandes eingestellt werden kann. Denkbar und bevorzugt ist hierbei auch, dass zwei elektrisch leitfähige Substrate A und B verklebt werden und die Spannung an diese Substrate angelegt wird. Die elektrisch leitfähige Trägerschicht ist in diesem Fall eine in z-Richtung durchgehend leitfähige Schicht, insbesondere und bevorzugt eine Metallfolie gemäß obiger Option a).

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C'" verwendet, womit die jeweiligen Schichten in den beschriebenen Ausführungsformen des Klebebandes umfassend wenigstens den Dreischichtverbund oder wenigstens den Fünfschichtverbund gemeint sind.

Die Klebemasseschichten C und C' sind unabhängig voneinander und können gleich oder verschieden voneinander sein.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallpartikel können in beliebigen geeigneten Formen vorliegen, darunter auch als dendritische Metallpartikel.

Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Beispielsweise enthält die elektrisch leitfähige Klebemasseschicht 5 bis 40 Gewichtsteile, besonders bevorzugt 20 bis 40 Gewichtsteile, ganz besonders bevorzugt 25 bis 35 Gewichtsteile, an elektrisch leitfähigen Partikeln, insbesondere Metallpartikeln und/oder metallisierten Partikeln, bezogen auf 100 Gewichtsteile an enthaltenen Polymeren.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 µm, besonders bevorzugt von 1 bis 6 µm, wiederum bevorzugt von 3 bis 5 µm, wie insbesondere 4 µm, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Klebkraft, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasse der Klebemasseschichten C bzw. C und/oder C' ist gemäß bevorzugter Ausführungsformen keine Haftklebemasse.

Gemäß besonders bevorzugter Ausführungsformen der Erfindung ist die Klebemasse der Klebemasseschichten C bzw. C und C' eine Haftklebemasse und die Klebemasseschicht C bzw. C und C' damit eine Haftklebemasseschicht.

Die Klebemasseschichten C bzw. C und/oder C' sind gemäß bevorzugter Ausführungsformen der Erfindung wie die Klebemasseschicht D Haftlebemassen enthaltend wenigstens ein Polyurethan.

Gemäß bevorzugter Ausführungsformen der Erfindung wird in den Klebemasseschichten C bzw. C und/oder C' das gleiche Polyurethan sowie ggf. das gleiche Harz verwendet, wie in der Klebemasseschicht D.

Hierdurch können insbesondere ähnliche Substrate, hier als A und B bezeichnet, miteinander verklebt sein.

Gemäß weiterer bevorzugter Ausführungsformen der Erfindung wird in den Klebemasseschichten C bzw. C und/oder C' eine von der Klebemasse der Klebemasseschicht D verschiedene Klebemasse verwendet.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Gemäß bevorzugter Ausführungsformen der Erfindung wird in den Klebemasseschichten C bzw. C und/oder C' eine von der Klebemasse der Klebemasseschicht D verschiedene Klebemasse verwendet, wobei die Klebemasse der Klebemasseschichten C bzw. C und/oder C' hitzeaktivierbar sein kann oder eine andere Haftklebemasse z.B. auf Acrylat-Basis sein kann.

Die Klebemasse der Klebemasseschicht D und je nach Ausführungsform weitere Klebemassen werden mittels bekannter Verfahren hergestellt und in Schichtform gebracht, insbesondere durch Ausstreichen. Dies kann unter Verwendung eines oder mehrerer geeigneter Lösemittel erfolgen oder auch lösemittelfrei.

Ferner können ggf. einer oder mehrere Trocknungsschritte erfolgen.

Gemäß bevorzugter Ausführungsformen wird wie beschrieben wenigstens eine Polyurethan-Prepolymer-Zusammensetzung, beispielsweise in Lösemittel, insbesondere unter Zuhilfenahme von Katalysatoren, hergestellt und die weiteren Substanzen, wie der Elektrolyt, ggf. Klebharz sowie Initiator und ggf. weitere Additive zugegeben, und ggf. mittels (weiterem) Lösemittel auf einen gewünschten Feststoffgehalt eingestellt.

Die Masse wird anschließend auf übliche Weise, insbesondere auf einen Liner oder eine Trägerschicht, beschichtet und getrocknet.

Anschließend erfolgt bevorzugt eine Vernetzung, insbesondere mittels UV-Strahlung oder Elektronenstrahl-Härtung.

Im Fall der UV-Strahlung ist insbesondere und beispielsweise UV-A Strahlung bevorzugt. Bevorzugt wird mit einer Dosis von 1.800 bis 2.400 mJ/cm² bestrahlt.

Das Laminieren mehrerer Schichten aufeinander erfolgt auf dem Fachmann bekannte Weise, wobei die Schichten so aufeinandergelegt werden, dass insbesondere ein Schichtverbund DTC, wobei T zwischen D und C angeordnet ist, oder C'-T'-D-T-C als doppelseitiges Klebeband erhalten wird.

Das Bereitstellen der Trägerschichten T bzw. T' kann wie oben bereits ausgeführt auf verschiedene Weise erfolgen.

So ist es denkbar, dass a) eine Metallfolie und/oder b) ein elektrisch leitfähiges Netz und/oder d) wenigstens ein Gitter aus Metall und/oder e) eine mit Metall bedampfte PET-Folie zwischen den jeweiligen Klebemasseschichten platziert wird.

Ferner können c) Metallpartikel direkt auf die Oberfläche der Klebemasseschicht D oder C oder C' aufgedampft werden.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 2.000 µm, besonders bevorzugt von 20 bis 500 µm, ganz besonders bevorzugt von 25 bis 200 µm. Jedoch ist eine so geringe Dicke wie möglich bevorzugt, so z. B. von unterhalb 100 µm.

In den Ausführungsformen des Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Um, falls gewünscht, die Verankerung der Klebemasseschicht oder der Klebemasseschichten auf einer Trägerschicht zu erhöhen, kann die Trägerschicht chemisch und/oder physikalisch, insbesondere physikalisch vorbehandelt sein. Corona-, Plasma- oder Flammvorbehandlung sind denkbar. Die Oberflächenbehandlung mittels Corona auch für metallisierte Folien ist dem Fachmann bekannt und beispielsweise in der EP 355 622 A2 beschrieben.

Nachfolgend werden bevorzugte Ausführungsformen der Erfindung unter Bezugnahme auf die beiliegenden Figuren näher erläutert und beschrieben. Dabei zeigen:
Fig. 1 eine vereinfachte schematische Querschnittsdarstellung durch ein erfindungsgemäßes doppelseitiges Klebeband in einer bevorzugten Ausführungsform; und
Fig. 2 eine vereinfachte schematische Querschnittsdarstellung durch ein erfindungsgemäßes doppelseitiges Klebeband in einer bevorzugten Ausführungsform; und
Fig. 3 eine vereinfachte schematische Querschnittsdarstellung durch ein erfindungsgemäßes doppelseitiges Klebeband in einer bevorzugten Ausführungsform; und
Fig. 4 eine vereinfachte schematische Querschnittsdarstellung durch einen erfindungsgemäßen verklebten Verbund einer bevorzugten Ausführungsform; und
Fig. 5 eine vereinfachte schematische Querschnittsdarstellung durch einen erfindungsgemäßen verklebten Verbund, an den eine Spannung angelegt ist, in einer bevorzugten Ausführungsform; und
Fig. 6 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und
Fig. 7 eine vereinfachte schematische Querschnittsdarstellung durch einen erfindungsgemäßen verklebten Verbund einer bevorzugten Ausführungsform; und
Fig. 8 eine vereinfachte schematische Querschnittsdarstellung durch einen erfindungsgemäßen verklebten Verbund einer bevorzugten Ausführungsform.

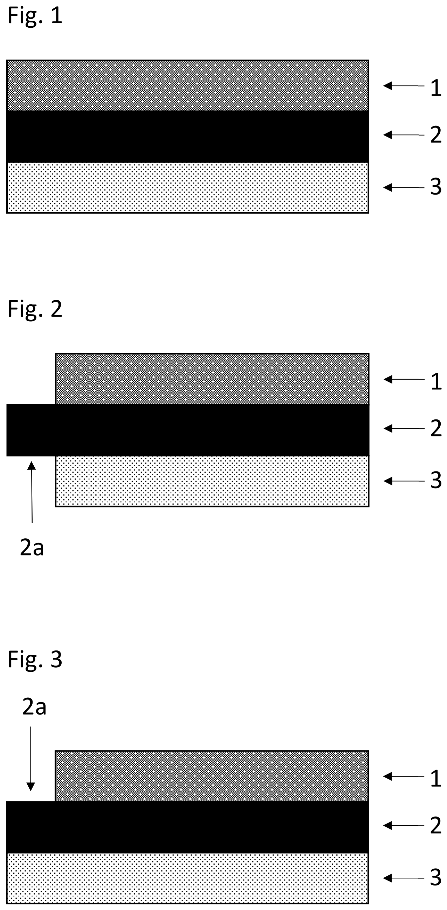

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Zinn beschichtete PET-Folie, wobei die mit Zinn metallisierte Seite an die Schicht D 1 gebunden ist.

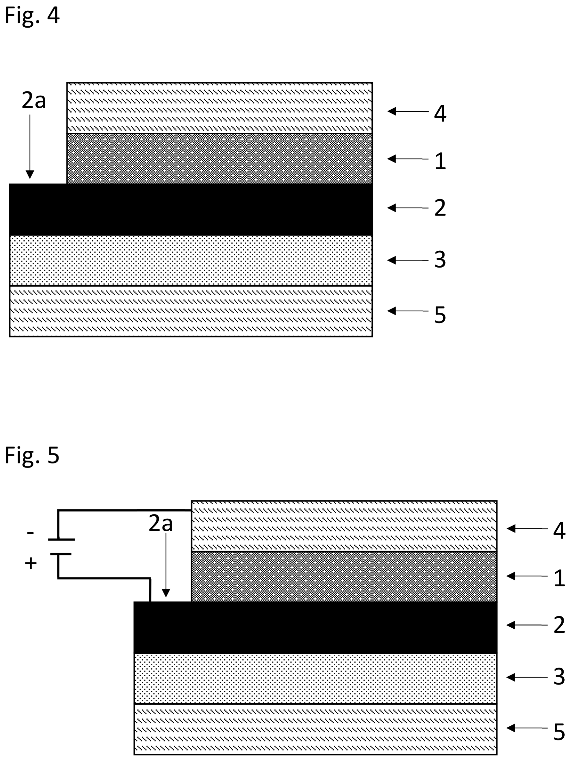

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

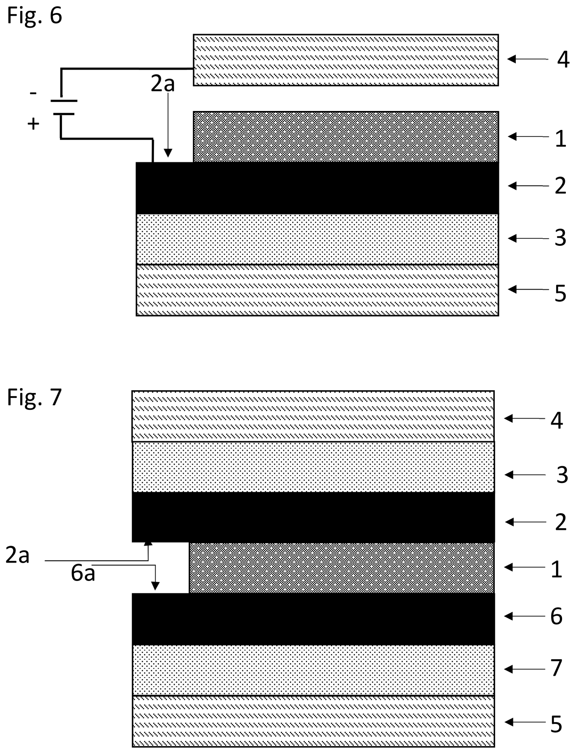

Durch das Anlegen der Spannung wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

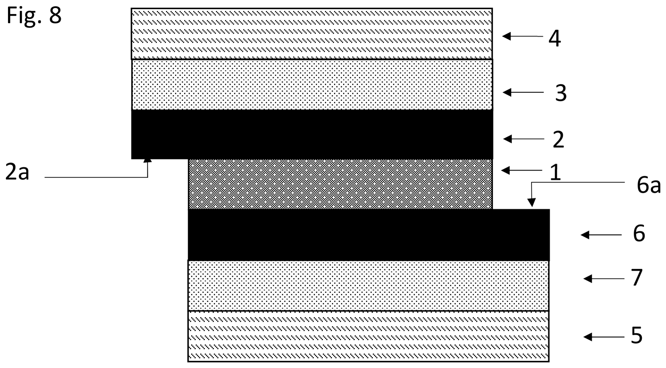

In Fig. 8 ist eine weitere schematische Darstellung des erfindungsgemäßen verklebten Verbundes in einer bevorzugten Ausführungsform abgebildet, welche der Darstellung gemäß Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

Die Darstellungen in den Fig. 1 bis 8 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen. Die mit "E" gekennzeichneten Beispiele stellen erfindungsgemäße Beispiele für Klebemassen dar, während die mit "V" gekennzeichneten Beispiele Vergleichsbeispiele sind.

**Tabelle 1: Verwendete Rohstoffe**

| **Handelsname** | **Chemische Bezeichnung/ Beschreibung** | **Hersteller/ Lieferant** |
|---|---|---|
| STEPANPOL PH-56 | Aromatisches Polyesterpolyol (Mw ca. 2.000 g/mol) | Stepan Company |
| Krasol^{®} LBH 2000 | Hydroxyl-terminiertes Polybutadien, Polybutadien-Polyol (Mw ca. 2.000 g/mol) | Cray Valley |
| GMMA | Glycerol monomethacrylat (CAS: 5919-74-4) | abcr GmbH |
| IPDI | Isophorondiisocyanat (CAS: 4098-71-9) | Sigma Aldrich |
| Coscat^{®} 83 | Katalysator Bismuttrisneodecanoat (+ Neodecansäure); (CAS: 34364-26-6 / 26896-20-8) | Vertellus |
| Methylethylketon (MEK) | Lösungsmittel (CAS: 78-93-3) | Sigma Aldrich |
| BMIM-PF₆ | 1-Butyl-3-methyl-imidazoliumhexafluorophosphat (CAS: 174501-64-5) | Sigma Aldrich |
| EMIM-TFSI | 1-Ethyl-3-methylimidazoliumbis(trifluormethylsulfonyl)imid, (CAS: 174899-82-2) | Sigma Aldrich |
| AMIM-TFSI | 1-Allyl-3-methylimidazoliumbis(trifluormethylsulfonyl)imid (CAS: 655249-87-9) | Sigma Aldrich |
| EMIM-OTf | 1-Ethyl-3-methylimidazolium-triflat (CAS: 145022-44-2) | Sigma Aldrich |
| Novares TK 100 Solid | KW-basiertes Harz | Rain Carbon Germany GmbH |
| 2,2-Dimethoxy-2-phenylacetophenon (DMPA) | Photoinitiator; (CAS: 24650-42-8) | Sigma Aldrich |

**Tabelle 2: Abkürzungen**

| | |
|---|---|
| IPA | Isopropylalkohol |
| MEK | Methylethylketon |
| NCO | Isocyanat |
| OH | Hydroxy |
| PET | Polyethylenterephthalat |
| PU | Polyurethan |
| rpm | Umdrehungen pro Minute (revolutions per minute) |

Die Zusammensetzungen, die auf ihre elektrische Ablösbarkeit untersucht wurden, sind in den Tabellen 3 bis 6 wiedergegeben. Die Mengen der Bestandteile sind jeweils in Gew.-% angegeben, wobei die Summer aller Bestandteile einer beispielhaften Zusammensetzung 100 Gew.-% ergibt.

Die Zusammensetzungen in Tabelle 3 wurden auf folgende Weise hergestellt.
1) Herstellung eines Gemisches enthaltend ein erstes PU-Prepolymer 1 (Beispiel für Polyurethan-Prepolymer a1):
   1a) Vermischen der Diole (57,96 Gew.-% STEPANPOL PH-56 und 0,51 Gew.-% GMMA) in einem Glas mit 35 Gew.-% Lösungsmittel MEK
   1b) Rühren bis homogene Masse erreicht ist, dann Zugabe von 6,43 Gew.-% des Diisocyanates (IPDI); NCO:OH Verhältnis 0,9
   1c) Rühren für 5 min, dann Überführung in Reaktor (unter Stickstoff)
   1d) Zugabe von 0,10 Gew.-% des Katalysators Coscat 83
   1e) Rühren für 24 h bei 200 rpm und 60 °C.
   Die Mengenangaben in Gew.-% beziehen sich auf das Gesamtgewicht des in diesem Schritt 1) hergestellten Gemisches.
2) Herstellung eines Gemisches enthaltend ein zweites PU-Prepolymer 2 (Beispiel für Polyurethan-Prepolymer a2)
   2a) Vermischen der Diole (63,01 Gew.-% Krasol LBH-2000 und 0,51 Gew.-% GMMA) in einem Glas mit 30 Gew.-% Lösungsmittel MEK
   2b) Rühren bis homogene Masse erreicht ist, dann Zugabe von 6,37 Gew.-% des Diisocyanates (IPDI); NCO:OH Verhältnis 0,9
   2c) Rühren für 5 min, dann Überführung in Reaktor (unter Stickstoff)
   2d) Zugabe von 0,11 Gew.-% des Katalysators Coscat 83
   2e) Rühren für 24 h bei 200 rpm und 60 °C.
   Die Mengenangaben in Gew.-% beziehen sich auf das Gesamtgewicht des in diesem Schritt 2) hergestellten Gemisches.
3) Herstellung des Blends
   3a) Vermischen des Gemisches aus Schritt 1 (Prepolymer 1) mit dem Gemisch aus Schritt 2) (Prepolymer 2) in einem Glas im Verhältnis 80/20 in Bezug auf den Feststoffgehalt
   3b) Zugabe der jeweiligen ionischen Flüssigkeit in der in Tabelle 3 angegebenen Menge
   3c) Zugabe von DMPA in der angegebenen Menge
   3d) Rühren bis die Masse homogen war.
4) Vernetzen
   4a) Ausstreichen der Masse nach Schritt 3d) auf einem mit Silikon-Release beschichteten PET-Liner (50 µm Schichtdicke der ausgestrichenen Masse)
   4b) Trocknen 15 min bei 80 °C, wodurch das Lösungsmittel MEK verdampfte
   4c) Eindecken mit silikonisierter PET-Folie
   4d) Vernetzung unter UV-Licht (2.000 mJ/cm², im UV-A Bereich).

Die nach Schritt 4d) erhaltenen vernetzten Haftklebemasseschichten wurden auf ihre Klebkraft und ihre elektrische Ablösbarkeit untersucht.

Hierzu wurden die Schichten jeweils auf eine 23 µm dicke mit Zinn beschichtete PET-Folie laminiert. Die Zinn-Beschichtung der PET-Folie war dabei in Kontakt mit der jeweiligen auf die elektrische Ablösbarkeit zu untersuchende Klebemasse.

Ferner wurde die chemische Beständigkeit ebenfalls anhand der Klebkraftmessung bestimmt, wie unten beschrieben. Hierzu wurden die nach Schritt 4d) erhaltenen vernetzten Haftklebemasseschichten auf eine 23 µm dicke PET-Folie laminiert, allerdings ohne Zinn-Beschichtung.

Die Zusammensetzungen in Tabelle 4 wurden auf analoge Weise wie für Tabelle 3 beschrieben hergestellt, wobei zusätzlich zwischen Schritt 3a) und 3b) das Harz in der angegebenen Menge hinzugegeben wurde.

Die erhaltenen Massen wurden ebenfalls homogenisiert und wie oben angegeben ausgestrichen und vernetzt.

Die Zusammensetzungen in Tabelle 5 wurden auf analoge Weise wie für Tabelle 3 beschrieben hergestellt, wobei Schritt 2) (Herstellung des Prepolymers 2) wegfiel, da diese Zusammensetzungen nur ein Polyurethan-Prepolymer enthalten.

Die Zusammensetzungen in Tabelle 6 wurden auf analoge Weise wie für Tabelle 3 beschrieben hergestellt, wobei Schritt 1) (Herstellung des Prepolymers 1) wegfiel, da diese Zusammensetzungen nur ein Polyurethan-Prepolymer enthalten.

Die jeweiligen Substanzen der Beispiele in den Tabellen 5 und 6 wurden in den angegebenen Mengen miteinander vermischt.

Die erhaltenen Massen wurden ebenfalls homogenisiert und wie oben angegeben ausgestrichen und vernetzt.

Die Klebebände wurden anhand der Klebkraft auf Stahl hinsichtlich ihrer elektrischen Ablösbarkeit getestet, wobei die Klebkraft vor dem Anlegen einer Spannung getestet wurde und bei weiteren Prüfkörpern zunächst eine Spannung von 9 V für 60 Sekunden angelegt wurde und erst dann die Klebkraft bestimmt wurde.

Die Spannung wurde dabei zwischen dem Stahlsubstrat und der Zinn-beschichteten PET-Folie angelegt, wobei der Minuspol an das Stahlsubstrat und der Pluspol an die Zinnfolie angelegt wurde.

Weitere Angaben zu den Prüfmethoden befinden sich im unten aufgeführten Teil "Prüfmethoden".

Die Ergebnisse sind ebenfalls in den Tabellen 3 bis 6 zusammengefasst. Bei den Beispielen, bei denen keine ionische Flüssigkeit enthalten ist und somit auch durch Anlegen einer Spannung keine elektrische Ablösbarkeit vorliegt, wurde auf weitere Untersuchungen nach Lagerung unter verschiedenen Bedingungen verzichtet und die entsprechenden Werte somit nicht bestimmt (n.b.). Ferner wurden aus Effizienzgründen die Lagerungsversuche (Klebkraft vor und nach Anlegen einer Spannung bei unter den angegebenen Bedingungen gelagerten Proben) nur bei ausgewählten erfindungsgemäßen Beispielen durchgeführt. Bei den anderen Beispielen wurden die entsprechenden Werte dann ebenso nicht bestimmt.

**Tabelle 3: Zusammensetzungen PU-Prepolymer-Blend ohne Harz und Messergebnisse**

| **Bestandteile** | **V1** | **E1** | **E2** | **E3** | **E4** | **E5** | **E6** | **E7** | **E8** | **E9** |
|---|---|---|---|---|---|---|---|---|---|---|
| PH 56 | 71,2 | 67,9 | 66,6 | 64,7 | 69,8 | 68,7 | 67,9 | 66,6 | 66,6 | 66,6 |
| GMMA | 0,8 | 0,7 | 0,7 | 0,7 | 0,8 | 0,8 | 0,7 | 0,7 | 0,7 | 0,7 |
| IPDI | 9,7 | 9,2 | 9,1 | 8,8 | 9,5 | 9,4 | 9,2 | 9,1 | 9,1 | 9,1 |
| CosCat 83 | 0,1 | 0,1 | 0,1 | 0,1 | 0,1 | 0,1 | 0,1 | 0,1 | 0,1 | 0,1 |
| DMPA | 0,2 | 0,2 | 0,2 | 0,2 | 0,2 | 0,2 | 0,2 | 0,2 | 0,2 | 0,2 |
| Krasol LBH-2000 | 18,0 | 17,1 | 16,8 | 16,3 | 17,6 | 17,4 | 17,1 | 16,8 | 16,8 | 16,8 |
| BMIM-PF₆ | 0,0 | 4,8 | 6,5 | 9,1 | 0,0 | 0,0 | 0,0 | 0,0 | 0,0 | 0,0 |
| EMIM-TFSI | 0,0 | 0,0 | 0,0 | 0,0 | 2,0 | 3,4 | 4,8 | 6,5 | 0,0 | 0,0 |
| EMIM-OTf | 0,0 | 0,0 | 0,0 | 0,0 | 0,0 | 0,0 | 0,0 | 0,0 | 6,5 | 0,0 |
| AMIM-TFSI | 0,0 | 0,0 | 0,0 | 0,0 | 0,0 | 0,0 | 0,0 | 0,0 | 0,0 | 6,5 |
| | | | | | | | | | | |
| Klebkraft [N/cm] initial | 2,2 | 3,2 | 2,7 | 3,0 | 3,0 | 2,7 | 2,5 | 2,3 | 3,3 | 1,9 |
| Klebkraft 3T, 23 °C, 50 % r.F. [N/cm] | n.b. | n.b. | 4,6 | n.b. | n.b. | n.b. | 5,0 | 4,3 | n.b. | n.b. |
| Klebkraft 3T, 65 °C, 90 % r.F. [N/cm] | n.b. | n.b. | 4,4 | n.b. | n.b. | n.b. | 7,4 | n.b. | n.b. | n.b. |
| Klebkraft + 9 V, 60 s [N/cm] | 2,4 | 0,9 | <0,1 | <0,1 | <0,1 | <0,1 | <0,1 | <0,1 | 1,1 | <0,1 |
| Klebkraft 3T, 23 °C, 50 % r.F. + 9 V, 60 s [N/cm] | n.b. | n.b. | 0,8 | n.b. | n.b. | n.b. | 1,2 | <0,1 | n.b. | n.b. |
| Klebkraft 3T, 65 °C, 90 % r.F., + 9 V, 60 s [N/cm] | n.b. | n.b. | 0,3 | n.b. | n.b. | n.b. | <0,1 | n.b. | n.b. | n.b. |
| Chemische Beständigkeit: Klebkraft nach IPA/H₂O [N/cm] | A | A | A | A | A | A | A | A | A | A |

**Tabelle 4: Zusammensetzungen PU-Prepolymer-Blend mit Harz und Messergebnisse**

| **Bestandteile** | **V2** | **E10** | **E11** |
|---|---|---|---|
| PH 56 | 68,4 | 64,1 | 64,1 |
| GMMA | 0,8 | 0,7 | 0,7 |
| IPDI | 9,3 | 8,8 | 8,8 |
| CosCat 83 | 0,1 | 0,1 | 0,1 |
| DMPA | 0,2 | 0,2 | 0,2 |
| Krasol LBH-2000 | 17,3 | 16,2 | 16,2 |
| Novares TK-100 | 3,8 | 3,6 | 3,6 |
| BMIM-PF₆ | 0,0 | 6,3 | 0,0 |
| EMIM-TFSI | 0,0 | 0,0 | 6,3 |
| | | | |
| Klebkraft [N/cm] initial | 2,7 | 3,8 | 3,5 |
| Klebkraft + 9 V, 60 s [N/cm] | 2,6 | <0,1 | <0,1 |
| Klebkraft 3T, 23 °C, 50 % r.F. [N/cm] | n.b. | 4,0 | 4,2 |
| Klebkraft 3T, 23 °C, 50 % r.F. + 9 V, 60 s [N/cm] | n.b. | <0,1 | 0,4 |
| Chemische Beständigkeit: Klebkraft nach IPA/H₂O [N/cm] | A | A | A |

**Tabelle 5: Zusammensetzung mit nur einem Polyurethan-Prepolymer a1) und Messergebnisse**

| **Bestandteile** | **V3** | **E12** | **E13** |
|---|---|---|---|
| PH 56 | 88,94 | 83,13 | 83,13 |
| GMMA | 0,79 | 0,74 | 0,74 |
| IPDI | 9,87 | 9,22 | 9,22 |
| CosCat 83 | 0,15 | 0,14 | 0,14 |
| DMPA | 0,25 | 0,23 | 0,23 |
| BMIM-PF₆ | 0,0 | 6,54 | 0,0 |
| EMIM-TFSI | 0,0 | 0,0 | 6,54 |
| | | | |
| Klebkraft [N/cm] initial | 1,9 | 3,0 | 2,4 |
| Klebkraft + 9 V, 60 s [N/cm] | 1,8 | <0,1 | <0,1 |
| Klebkraft 3T, 23 °C, 50 % r.F. [N/cm] | n.b. | 5,8 | 4,5 |
| Klebkraft 3T, 23 °C, 50 % r.F. + 9 V, 60 s [N/cm] | n.b. | <0,1 | <0,1 |

**Tabelle 6: Zusammensetzung mit nur einem Polyurethan-Prepolymer a2) ohne Harz und Messergebnisse**

| **Bestandteile** | **V4** | **V5** | **V6** |
|---|---|---|---|
| GMMA | 0,7 | 0,7 | 0,7 |
| IPDI | 9,1 | 8,5 | 8,5 |
| CosCat 83 | 0,1 | 0,1 | 0,1 |
| DMPA | 0,3 | 0,3 | 0,3 |
| Krasol LBH-2000 | 89,8 | 83,9 | 83,9 |
| BMIM-PF₆ | 0,0 | 6,5 | 0,0 |
| EMIM-TFSI | 0,0 | 0,0 | 6,5 |
| | | | |
| Klebkraft [N/cm] initial | 2,1 | 2,0 | 2,4 |
| Klebkraft + 9 V, 60 s [N/cm] | 2,2 | 2,3 | 2,4 |
| Klebkraft 3T, 23 °C, 50 % r.F. [N/cm] | n.b. | 3,7 | 4,9 |
| Klebkraft 3T, 23 °C, 50 % r.F. + 9 V, 60 s [N/cm] | n.b. | 3,5 | 4,1 |

**Tabelle 7: Ionische Leitfähigkeit ausgewählter Zusammensetzungen**

| **Zusammensetzung** | **Ionische Leitfähigkeit σ ± s in µs/m** |
|---|---|
| E1 | 1,82 ± 0,02 |
| E2 | 2,47 ± 0,09 |
| E7 | 6,24 ± 0,14 |
| E8 | 0,235 ± 0,006 |
| E10 | 1,98 ± 0,07 |
| E12 | 2,39 ± 0,01 |
| E13 | 3,77 ± 0,03 |

Wie anhand der Tabellen 3 bis 6 erkennbar ist es mit den erfindungsgemäßen Beispielen enthaltend a) wenigstens ein Polyurethan, welches durch Vernetzung wenigstens eines Polyurethan-Prepolymers basierend auf wenigstens einem polaren Polyol, welches ausgewählt ist aus der Gruppe bestehend aus Polyester-Polyolen, Polycarbonat-Polyolen und Polyether-Polyolen, hergestellt ist, und b) wenigstens einem Elektrolyten, insbesondere wenigstens einer ionischen Flüssigkeit, gelungen, die Klebkraft durch Anlegen einer Spannung deutlich zu reduzieren, sodass die verklebten Substrate ohne Beschädigung und mit wenig bzw. nahezu keinem Kraftaufwand voneinander gelöst werden können. Gleichzeitig sind die entsprechenden Haftklebemassen bzw. Haftklebebänder und die daraus hergestellten verklebten Verbunde lagerungsstabil unter Standardbedingungen aber auch unter feucht-warmen Bedingungen (65 °C, 90 % r.F.): Die Klebkräfte und die elektrische Ablösbarkeit sind durch die Lagerung nicht negativ beeinträchtigt. Gleichzeitig weisen die erfindungsgemäßen Beispiele eine hohe chemische Beständigkeit auf.

### Prüfmethoden

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

### Molmasse (GPC)

Die Angaben der zahlen- oder gewichtsmittleren Molmasse (Mn beziehungsweise Mw) in dieser Schrift beziehen sich auf die an sich bekannte Bestimmung per Gelpermeationschromatographie (GPC). Die Bestimmung erfolgt an 100 µl klarfiltrierter Probe (Probenkonzentration 4 g/I). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, 10³ Å, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS SDV, 5 µm, 10³ Ä sowie 10⁵ Ä und 10⁶ Ä mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt, so dass die Angabe der Daten in Polystyrol-Massenäquivalenten erfolgt.

### Klebkraft Stahl

Zum Testen der Klebkraft der auf die elektrische Ablösbarkeit zu untersuchenden Schicht auf Stahl: Ein 20 mm breiter Streifen des Klebebands umfassend die auf die elektrische Ablösbarkeit zu untersuchende Klebemasse und die 23 µm dicke mit Zinn beschichtete PET-Folie wurde auf eine Stahlplatte aufgebracht, die zuvor zweimal mit Aceton gewaschen wurde. Der Klebestreifen wird durch fünfmaliges doppeltes Überrollen mittels einer 4 kg-Rolle auf das Substrat aufgedrückt. Das Klebeband wird sofort (initial) mit einer Geschwindigkeit von 300 mm/min und in einem Winkel von 180° vom Substrat abgezogen. Alle Messungen werden bei Raumtemperatur durchgeführt.

Ferner werden Proben für 3 Tage (T) bei 23 °C und 50 % r.F. oder für 3 Tage bei 65 °C und 90 % r.F. gelagert und anschließend das Klebeband mit einer Geschwindigkeit von 300 mm/min und in einem Winkel von 180° vom Substrat abgezogen.

### Elektrische Ablösbarkeit

Für die Messung der Klebkraft nach Anlegen einer Spannung wird das Klebeband wie oben beschrieben auf die Stahlplatte geklebt. Es wird eine Gleichspannung von 9 V angelegt, und zwar so, dass der Minuspol an die Stahlplatte gelegt wird und der Pluspol an die mit Zinn beschichtete Folie gelegt wird.

Nach 60 s wird die Spannung abgeschaltet und die Probe sofort in die Messapparatur gespannt und die Klebkraft gemessen.

Dabei werden vor dem Anlegen der Spannung ebenfalls die in den jeweiligen Tabellen angegebenen Aufziehzeiten oder Lagerungszeiten angewendet.

### Chemische Beständigkeit

Zur Beurteilung der Chemikalienbeständigkeit wird die Klebkraft auf ASTM-Stahl vor und nach Behandlung mit einem Gemisch aus Isopropanol/Wasser 70/30 (Gew.-Anteile) verglichen. Ein 0,5 cm breiter Streifen des Haftklebebandes wird auf einer ASTM-Prüfplatte durch fünfmaliges doppeltes Überrollen mittels einer 4 kg-Rolle verklebt. Die so erhaltenen Verklebungen werden für 24 h bei Normklima (Luft, 23 °C, 50 % relative Feuchte) gelagert und anschließend in einer abgedichteten Box mit den Testchemikalien so gelagert, dass sie vollständig von diesen bedeckt sind. Die Box wird für 72 h in einem auf 60 °C temperierten Ofen gelagert.

Die Boxen werden nach der Lagerzeit aus dem Ofen entnommen, die Probenmuster vorsichtig mit einem Tuch gereinigt und 2 h bei Normklima konditioniert.

Für die Bestimmung der Klebkraft (bei Normklima - Luft, 23 °C, 50 % relative Feuchte) wurde die Prüfplatte eingespannt und der Selbstklebestreifen über sein freies Ende mittels einer Zugprüfmaschine unter einem Schälwinkel von 180° mit einer Geschwindigkeit von 300 mm/min abgezogen. Die dafür notwendige Kraft wird mit einem Zugprüfgerät ermittelt. Die Messergebnisse werden über drei Messungen gemittelt und normiert auf die Breite des Streifens in N/cm angegeben. Die Chemikalienbeständigkeit wurde basierend auf diesen Ergebnissen wie folgt kategorisiert, als Referenz dient die oben beschriebene Initialklebkraft.

**Tabelle 7: Bewertung der Chemikalienbeständigkeit**

| Bewertung der Chemikalienbeständigkeit | Beobachtung |
|---|---|
| A | Klebeband zeigte nach Chemikalienbehandlung eine Klebkraft von > 60 % im Vergleich zur Referenz |
| B | Klebeband zeigte nach Chemikalienbehandlung eine Klebkraft von > 30 % im Vergleich zur Referenz |
| C | Klebeband löste sich von der Stahlplatte |

### Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Ionische Leitfähigkeit

Die ionische Leitfähigkeit der Haftklebemasseschichten wurde mit Hilfe der Potentiostatischen Elektrochemischen Impedanzspektroskopie (PEIS) bestimmt. Die Messungen erfolgten mit einem BioLogic VMP-300 Potentiostaten und einer Wechselspannung mit einer Amplitude von 10 mV im Frequenzbereich von 1 MHz bis 100 mHz. Für die Messung wurde analog zur Klebkraftmessung ein 20 mm breiter Streifen des Klebebands umfassend die zu untersuchende Klebemasse und eine 23 µm dicke mit Zinn beschichtete PET-Folie auf eine Stahlplatte aufgebracht, die zuvor zweimal mit Aceton gewaschen und seitlich isoliert wurde. Die Proben wurden vor der Messung typischerweise bei 23 °C und 55 % relativer Luftfeuchte gelagert und die Messungen bei 23°C durchgeführt. Die Arbeitselektrode wurde an die mit Zinn beschichtete PET-Folie und die Gegenelektrode an der Stahlplatte angebracht. Die effektive Probenfläche betrug 1 cm × 4 cm (4 cm²). Nach der Messung wurde die ionische Leitfähigkeit (σ) nach der Gleichung σ = L / (R*A) berechnet, wobei L die Klebstoffschichtdicke (in diesem Fall immer 100 µm), A die Probenquerschnittsfläche (4 cm²) und R = der Bulk-Widerstand R2 (in Ω) sind.

### Bezugszeichenliste

- 1: Klebemasseschicht D
- 2: elektrisch leitfähige Trägerschicht T
- 2a: freie Fläche der elektrisch leitfähigen Trägerschicht T
- 3: zweite Klebemasseschicht C
- 4: erstes Substrat A
- 5: zweites Substrat B
- 6: zweite elektrisch leitfähige Trägerschicht T'
- 6a: freie Fläche der elektrisch leitfähigen Trägerschicht T'
- 7: dritte Klebemasseschicht C'

## Patentansprüche

1. Haftklebemasse enthaltend
a) wenigstens ein vernetztes Polyurethan, welches durch Vernetzung eines oder mehrerer Polyurethan-Prepolymere hergestellt ist, wobei wenigstens eines der Polyurethan-Prepolymere auf wenigstens einem Polyol basiert, welches ausgewählt ist aus der Gruppe bestehend aus Polyester-Polyolen, Polycarbonat-Polyolen und Polyether-Polyolen; und
b) wenigstens ein Elektrolyt, wobei der Elektrolyt ausgewählt ist aus der Gruppe bestehend aus ionischen Flüssigkeiten und Metallsalzen, wobei ionische Flüssigkeiten besonders bevorzugt sind.

2. Haftklebemasse nach Anspruch 1, **dadurch gekennzeichnet, dass**
das Anion der ionischen Flüssigkeit ausgewählt ist aus der Gruppe bestehend aus Hexafluorphosphat (PF₆⁻), Bis(trifluormethylsulfonyl)imid (CF₃SO₂)₂N⁻, TFSI), Acetat (CH₃COO⁻), Tetrafluorborat (BF₄⁻), Octanoat, Tosylat (OTs), Trifluormethansulfonat (CF₃SO₃⁻, OTf, Triflat), Benzoat, Bis(fluorsulfonyl)imid ((FSO₂)₂N⁻, FSI), Dicyanamid (N(CN)₂⁻), Ethylsulfat, Hexylsulfat, Perchlorat, Methansulfonat (CH₃SO₃⁻), Methylsulfat (CH_{3O}-SO₃⁻), Acrylat, Propionat, Methylcarbonat, Methylphosphonat (CH₄O₃P⁻), Thiocyanat (SCN⁻), Dibutylphosphat, Diethylphosphat, Dodecanoat, Bromid (Br⁻), Fluorid (F⁻), Chlorid (Cl⁻), Iodid (I⁻), Tetrachloroaluminat (AlCl₄⁻), Tetrachloroferrat (FeCl₄⁻), Al₂Cl₇⁻ , NO₃⁻, CF₃COO⁻, CF₃CO₃⁻, (CF₃SO₂)₃C⁻, AsF₆⁻, SbF₆⁻, CF₃(CF₂)₃SO₃⁻, (CF₃CF₂SO₂)₂N⁻ und CF₃CF₂CF₂COO⁻ und dabei bevorzugt ausgewählt ist aus der Gruppe bestehend aus Hexafluorphosphat (PF₆⁻), Bis(trifluormethylsulfonyl)imid (CF₃SO₂)₂N⁻, TFSI), Acetat (CH₃COO⁻), Tetrafluorborat (BF₄⁻), Octanoat, Tosylat (OTs), Trifluormethansulfonat (CF₃SO₃⁻, OTf, Triflat), Benzoat, Bis(fluorsulfonyl)imid ((FSO₂)₂N⁻,FSI) und Dicyanamid (N(CN)₂⁻) und/oder das Kation der ionischen Flüssigkeit ausgewählt ist aus der Gruppe bestehend aus Kationen auf Imidazolium-Basis, Kationen auf Pyridinium-Basis, Kationen auf Pyrrolidinium-Basis, Kationen auf Ammonium-Basis, Kationen auf Phosphonium-Basis, Kationen auf Oxazolium-Basis, Kationen auf Guanidinium-Basis und Kationen auf Thiazolium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium, 1-Butyl-3-methylimidazolium und 1-Allyl-3-methylimidazolium.

3. Haftklebemasse nach einem der vorherigen Ansprüche, **dadurch gekennzeichnet, dass** der Elektrolyt ausgewählt ist aus der Gruppe bestehend aus den ionischen Flüssigkeiten 1-Ethyl-3-methylimidazolium-bis(trifluormethylsulfonyl)imid (EMIM-TFSI), 1-Allyl-3-methylimidazolium-bis(trifluormethylsulfonyl)imid (AMIM-TFSI), 1-Ethyl-3-methylimidazolium-Triflat (EMIM-OTf), und 1-Butyl-3-methylimidazolium-hexafluorophosphat (BMIM-PF₆).

4. Haftklebemasse nach einem der vorhergehenden Ansprüche, **dadurch gekennzeichnet, dass** sie 1,0 bis 15 Gew.-%, bevorzugt 2,5 bis 11 Gew.-%, an Elektrolyten, bevorzugt ionischen Flüssigkeiten, bezogen auf das Gesamtgewicht der Haftklebemasse, enthält.

5. Haftklebemasse nach einem der vorhergehenden Ansprüche, **dadurch gekennzeichnet, dass** das wenigstens eine vernetzte Polyurethan a) wenigstens ein Polyurethan umfasst, welches keine freien Isocyanat-Gruppen aufweist.

6. Haftklebemasse nach einem der vorhergehenden Ansprüche, **dadurch gekennzeichnet, dass** das wenigstens eine vernetzte Polyurethan a) durch Vernetzung eines Blends aus mindestens zwei verschiedenen Polyurethan-Prepolymeren a1) und a2) hergestellt ist, wobei sich die Polyurethan-Prepolymere a1) und a2) bezüglich der Zusammensetzung der Polymerkette voneinander unterscheiden, wobei wenigstens eines der Polyurethan-Prepolymere auf einem Polyester-Polyol und/oder einem Polycarbonat-Polyol basiert.

7. Haftklebemasse nach Anspruch 6, **dadurch gekennzeichnet, dass** das erste Polyurethan-Prepolymer a1) auf einem Polyesterpolyol und/oder einem Polycarbonat-Polyol basiert und das zweite Polyurethan-Prepolymer a2) auf einem hydroxy-terminierten aliphatischen Polymer, bevorzugt einem Polybutadien-Polyol, und/oder einem Polyfarnesen-Polyol und/oder einem fettsäurebasierten Polyester-Polyol basiert.

8. Haftklebemasse nach einem der vorhergehenden Ansprüche, **dadurch gekennzeichnet, dass** das oder die Polyurethan-Prepolymere zur Herstellung des vernetzten Polyurethans a) jeweils auf der Polyaddition einer Ausgangszusammensetzung basieren, die wenigstens eine Diol-Verbindung A enthält, wobei die Diol-Verbindung A mindestens eine aus der zwischen den OH-Gruppen verlaufenden Kette herausstehende C-C-Doppelbindung pro Molekül aufweist, wobei der Anteil an Diol-Verbindungen A in der Ausgangszusammensetzung 15 Gew.-% oder weniger, besonders bevorzugt 10 Gew.-% oder weniger, ganz besonders bevorzugt 5 Gew.-% oder weniger, beträgt, bezogen auf das Gesamtgewicht der betreffenden Ausgangszusammensetzung, und wobei die Vernetzung der Polyurethan-Prepolymere zur Herstellung des vernetzten Polyurethans a) über diese herausstehenden C-C-Doppelbindungen erfolgt.

9. Haftklebemasse nach Anspruch 8, **dadurch gekennzeichnet, dass** die wenigstens eine Diol-Verbindung A ausgewählt ist aus der Gruppe bestehend aus (Meth)Acrylaten.

10. Haftklebemasse nach einem der vorhergehenden Ansprüche, **dadurch gekennzeichnet, dass** die Vernetzung mittels UV-Strahlung oder mittels Elektronenstrahl-Härtung erfolgt.

11. Haftklebemasse nach einem der vorhergehenden Ansprüche, **dadurch gekennzeichnet, dass** sie wenigstens ein Harz enthält.

12. Klebeband umfassend wenigstens eine Haftklebemasseschicht D einer Haftklebemasse nach einem der Ansprüche 1 bis 11.

13. Klebeband nach Anspruch 12, **dadurch gekennzeichnet, dass** das Klebeband ein Transferklebband ist und aus der Haftklebemasseschicht D besteht.

14. Klebeband nach Anspruch 12, **dadurch gekennzeichnet, dass** es zusätzlich wenigstens die folgenden Schichten umfasst:
• wenigstens eine elektrisch leitfähige Trägerschicht T und
• Optional eine zweite Klebemasseschicht C, die auf der der Klebemasseschicht D gegenüberliegenden Seite der Trägerschicht T angeordnet ist.

15. Klebeband nach Anspruch 12, **dadurch gekennzeichnet, dass** es zusätzlich wenigstens die folgenden Schichten umfasst:
• Eine zweite Klebemasseschicht C; und
• wenigstens eine erste elektrisch leitfähige Trägerschicht T, die zwischen den Schichten D und C angeordnet ist; und
• wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
• Eine dritte Klebemasseschicht C', die auf der der ersten Klebemasseschicht D gegenüberliegenden Fläche der zweiten Trägerschicht T' angeordnet ist.

16. Verklebter Verbund umfassend wenigstens folgende Schichten:
• Ein erstes Substrat A; und
• Ein zweites Substrat B; und
• Ein Klebeband nach einem der Ansprüche 12 bis 15, welches zwischen dem Substrat A und dem Substrat B angeordnet ist und die Substrate A und B miteinander verklebt, wobei entweder das Substrat A und das Substrat B oder wenigstens eines der Substrate und das Klebeband oder das Klebeband an zwei verschiedenen Stellen elektrisch leitfähig ausgestaltet sind.

17. Verfahren zum elektrischen Lösen des Verbundes nach Anspruch 16, umfassend wenigstens folgende Verfahrensschritte:
i.) Anlegen einer Spannung an zwei verschiedenen elektrisch leitfähigen Stellen des Verbundes, wobei die Spannung bevorzugt 1 bis 50 V, besonders bevorzugt 2 bis 50 V, beträgt.

18. Verwendung der Haftklebemasse gemäß einem der Ansprüche 1 bis 11 oder des Klebebandes gemäß einem der Anspruch 12 bis 15 oder des verklebten Verbund nach Anspruch 16 in elektronischen Geräten, Automobilen, medizinischen Geräten, zahnmedizinischen Geräten sowie im handwerklichen Bereich und im Haushalt.
